(19) Europäisches Patentamt
European Patent Office
Office européen des brevets

(11) **EP 4 245 534 A1**

(12) **EUROPEAN PATENT APPLICATION**
published in accordance with Art. 153(4) EPC

(43) Date of publication:
**20.09.2023 Bulletin 2023/38**

(21) Application number: **21906626.3**

(22) Date of filing: **14.12.2021**

(51) International Patent Classification (IPC):
**B32B 27/32** (2006.01)    **B32B 1/02** (2006.01)
**B32B 7/12** (2006.01)    **B32B 9/00** (2006.01)
**B32B 9/04** (2006.01)    **B32B 27/00** (2006.01)
**B65D 65/40** (2006.01)

(52) Cooperative Patent Classification (CPC):
**B32B 1/02; B32B 7/12; B32B 9/00; B32B 9/04;
B32B 27/00; B32B 27/32; B65D 65/40**

(86) International application number:
**PCT/JP2021/046090**

(87) International publication number:
**WO 2022/131264 (23.06.2022 Gazette 2022/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.12.2020   JP 2020209303
05.02.2021   JP 2021017226**

(71) Applicant: **TOPPAN INC.**
**Tokyo 110-0016 (JP)**

(72) Inventors:
• **SATO Jin**
  **Tokyo 110-0016 (JP)**
• **OCHIAI Shinya**
  **Tokyo 110-0016 (JP)**
• **KITAHARA Tsukasa**
  **Tokyo 110-0016 (JP)**

(74) Representative: **TBK**
**Bavariaring 4-6**
**80336 München (DE)**

(54) **LAMINATE, PACKAGING BAG, AND STANDING POUCH**

(57)    A laminate according to an aspect of the present disclosure is a laminate including a substrate layer, a sealant layer, and an adhesive layer disposed between the substrate layer and the sealant layer, the adhesive layer being in contact with the sealant layer, in which the substrate layer is formed from an unstretched film containing a polyethylene having a density of 0.940 g/cm$^3$ or more as a main component, the sealant layer is formed from an unstretched film containing a polyethylene as a main component, and a content of polyethylene occupying the laminate is 90% by mass or more.

**Fig.1**

## Description

### Technical Field

The present disclosure relates to a laminate, a packaging bag, and a standing pouch. More specifically, the present disclosure relates to a laminate excellent in recyclability, and a packaging bag and a standing pouch which use this laminate.

### Background Art

A laminate has been known which includes a biaxially stretched PET (polyethylene terephthalate) film having excellent heat resistance and toughness as a base film and a polyolefin film, such as polyethylene or polypropylene, as a sealant layer (see, for example, Patent Literature 1).

Furthermore, a packaging material having high recyclability has been demanded in response to growing demand for construction of a recycling-oriented society. In general, it is considered that when the proportion of a main resin contained in a packaging material is 90% by mass or more, recyclability is high, but since most of conventional packaging materials are configured by containing a plurality of resin materials and do not satisfy the above criterion, the conventional packaging materials are not recycled in the existing circumstances.

To address this problem, Patent Literature 2 describes that in a laminate including a substrate, an adhesion layer, and a heat seal layer, the substrate and the heat seal layer each are configured from a polyethylene. By configuring the substrate and the heat seal layer with the same material, the above criterion is easily cleared. As the substrate, a stretched polyethylene film is used.

### Citation List

### Patent Literature

Patent Literature 1: Japanese Unexamined Patent Publication No. 2017-178357
Patent Literature 2: Japanese Unexamined Patent Publication No. 2020-55157

### Summary of Invention

### Technical Problem

[First object]

However, in recent years, due to the growing awareness of environmental problems triggered by plastic wastes in the seas and oceans, a further increase in efficiency of separate recovery and recycling of plastic materials has been required. That is, conventionally, even in a laminate for packaging whose high performance has been attained by combining various heterogeneous materials, the mono-material packaging material formation has been demanded.

In order to achieve the mono-material packaging material formation in the laminate, constituting films need to be formed using the same material. For example, since a polyethylene film that is one kind of polyolefin films is widely used as a packaging material, the mono-material packaging material formation using the polyethylene film is expected.

In a case where the packaging material is formed with a mono-material using a polyethylene film, from the viewpoint of printing suitability and bag-making suitability, a stretched polyethylene film is used as a polyethylene film for a front substrate. However, the stretched polyethylene film has problems in that adhesion with another layer to be laminated is low and the stretched polyethylene film is likely to be peeled off. Therefore, the packaging material formed with a mono-material using a polyethylene film can be used only for a soft packaging material not requiring high adhesion.

The present disclosure has been made in view of the problems of conventional arts described above, and a first object thereof is to provide a laminate being useful for achieving mono-material packaging material formation using a polyethylene film and having favorable adhesion strength and bag-making suitability and a packaging bag using the laminate.

[Second object]

The inventors have found that when the laminate described in Patent Literature 2 is applied to a packaging bag, a standing pouch, or the like, impact resistance is not sufficient in some cases. The inventors have solved this problem while maintaining high recyclability.

A second object of the present disclosure is to provide a laminate having sufficient impact resistance when applied to a packaging bag, a standing pouch, or the like and being easily recycled.

**Solution to Problem**

[First aspect]

In order to achieve the first object, the present disclosure provides a laminate including a substrate layer, a sealant layer, and an adhesive layer disposed between the substrate layer and the sealant layer, the adhesive layer being in contact with the sealant layer, in which the substrate layer is formed from an unstretched film containing a polyethylene having a density of 0.940 $g/cm^3$ or more as a main component, the sealant layer is formed from an unstretched film containing a polyethylene as a main component, and a content of polyethylene occupying the laminate is 90% by mass or more.

According to the laminate, by using the unstretched film containing a polyethylene as a main component for the substrate layer, favorable adhesion between the substrate layer and another layer is obtained. Furthermore, by the density of polyethylene constituting the substrate layer being 0.940 $g/cm^3$ or more, bag-making suitability and printing suitability become favorable. Furthermore, by using an unstretched film containing a polyethylene as a main component for the sealant layer and setting the content of polyethylene occupying the laminate to 90% by mass or more, an all-polyethylene packaging material formed with a mono-material using a polyethylene film and having excellent recyclability can be provided. Further, by the laminate using the unstretched polyethylene film for the substrate layer, the adhesion strength is increased, and by the strength as a packaging material being improved, even in the case of forming a pouch, such as a standing pouch, filled with liquid as packaged contents, the pouch can be prevented from being broken when the pouch is dropped.

The laminate may further include a gas barrier layer disposed between the substrate layer and the adhesive layer. By the laminate including the gas barrier layer, the gas barrier properties of the laminate are improved.

The gas barrier layer may include a vapor deposition layer. Furthermore, the vapor deposition layer may contain silicon oxide. Furthermore, the gas barrier layer may include a gas barrier coating layer containing a water-soluble polymer. By the gas barrier layer including the vapor deposition layer or the gas barrier coating layer, the gas barrier properties of the laminate are further improved.

The adhesive layer may be a layer formed from a cured product of a gas-barrier adhesive. In this case, the gas barrier properties of the laminate are further improved.

The laminate may further include a print layer disposed between the substrate layer and the sealant layer. Furthermore, the laminate may further include a resin layer formed from an unstretched film containing a polyethylene as a main component, the resin layer being disposed between the substrate layer and the sealant layer.

In the laminate, a difference in heat-fusing temperature between the substrate layer and the sealant layer may be 10°C or more. By setting the difference in heat-fusing temperature between the substrate layer and the sealant layer to 10°C or more, bag-making suitability is further improved, and the laminate is easily molded into a packaging bag or the like by heat sealing.

The present disclosure also provides a packaging bag obtained by forming the laminate into a bag. The packaging bag may be for use in boiling.

[Second aspect]

In order to achieve the second object, a first embodiment of the present disclosure provides a laminate including a substrate layer, an adhesive layer provided on a first surface side of the substrate layer, and a sealant layer bonded to the adhesive layer. The substrate layer and the sealant layer each are an unstretched film containing a polyethylene as a main component, and a proportion of polyethylene occupying the laminate is 90% by mass or more.

A second embodiment of the present disclosure is a packaging bag formed by bonding a sealant layer by using the laminate according to the first embodiment.

A third embodiment of the present disclosure is a standing pouch formed by bonding a sealant layer by using the laminate according to the first embodiment.

**Advantageous Effects of Invention**

According to the first aspect of the present disclosure, it is possible to provide a laminate being useful for achieving mono-material packaging material formation using a polyethylene film and having favorable adhesion strength and bag-making suitability and a packaging bag using the laminate.

According to the second aspect of the present disclosure, it is possible to provide a laminate having sufficient impact resistance when applied to a packaging bag, a standing pouch, or the like and being easily recycled, and a packaging bag and a standing pouch using the laminate.

**Brief Description of Drawings**

FIG. 1 is a schematic cross-sectional view illustrating a laminate according to an embodiment.
FIG. 2 is a schematic cross-sectional view illustrating a laminate according to an embodiment.
FIG. 3 is a schematic cross-sectional view illustrating a laminate according to an embodiment.
FIG. 4 is a schematic cross-sectional view illustrating a laminate according to an embodiment.
FIG. 5 is a schematic cross-sectional view illustrating a laminate according to an embodiment.
FIG. 6 is a schematic cross-sectional view illustrating a laminate according to an embodiment.
FIG. 7 is a schematic cross-sectional view illustrating a laminate according to an embodiment.
FIG. 8 is a schematic cross-sectional view illustrating a standing pouch according to an embodiment.
FIG. 9 is a schematic cross-sectional view illustrating a laminate according to an embodiment.

**Description of Embodiments**

Hereinafter, preferred embodiments of the present disclosure will be described in detail occasionally with reference to the drawings. Note that, in the drawings, the same or corresponding parts are designated by the same reference signs, and redundant description will be omitted. Furthermore, the dimensional ratios in the drawings are not limited to as ratios illustrated in the drawings.

In the following description, the configuration of the first aspect may be applied to the second aspect, and the configuration of the second aspect may be applied to the first aspect.

[First aspect]

<Laminate>

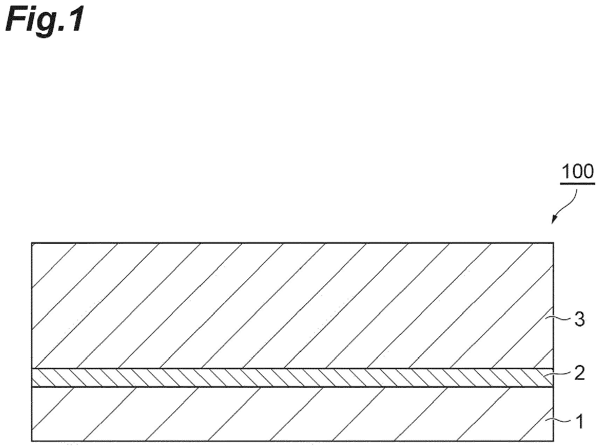

FIG. 1 is a schematic cross-sectional view illustrating a laminate according to an embodiment. A laminate 100 illustrated in FIG. 1 includes a substrate layer 1, an adhesive layer 2, and a sealant layer 3 in this order.

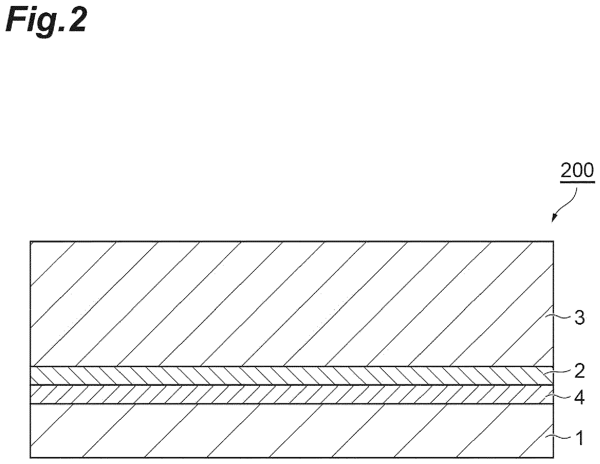

FIG. 2 is a schematic cross-sectional view illustrating a laminate according to another embodiment. A laminate 200 illustrated in FIG. 2 further includes a print layer 4 between the substrate layer 1 and the adhesive layer 2 in the laminate 100 illustrated in FIG. 1.

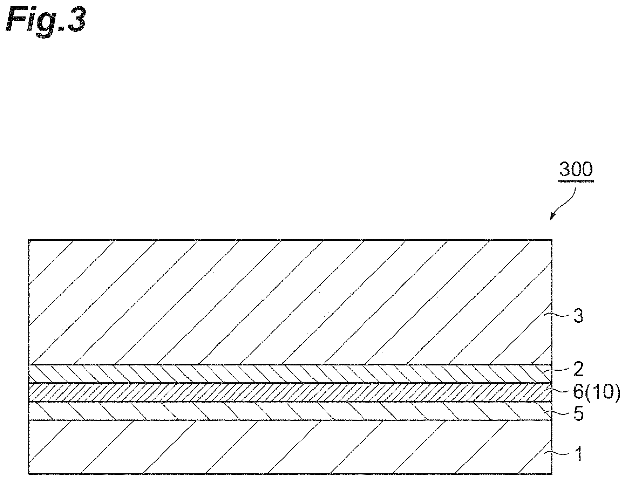

FIG. 3 is a schematic cross-sectional view illustrating a laminate according to still another embodiment. A laminate 300 illustrated in FIG. 3 includes the substrate layer 1, an undercoat layer 5, a gas barrier layer 10 including a vapor deposition layer 6, the adhesive layer 2, and the sealant layer 3 in this order.

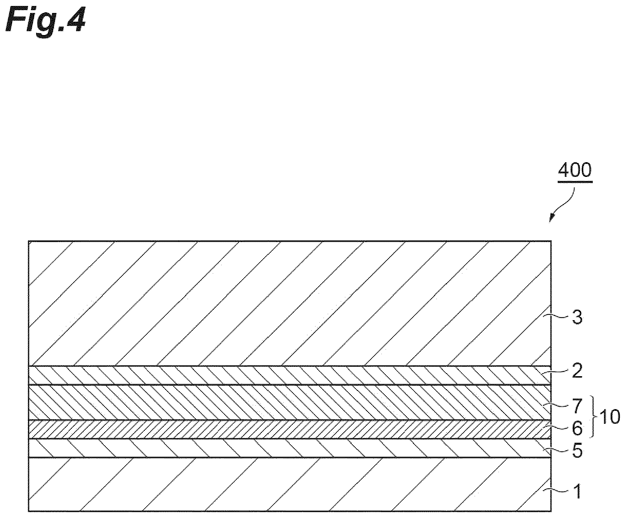

FIG. 4 is a schematic cross-sectional view illustrating a laminate according to still another embodiment. A laminate 400 illustrated in FIG. 4 has the same configuration as that of the laminate 300 illustrated in FIG. 3, except that the gas barrier layer 10 includes the vapor deposition layer 6 and a gas barrier coating layer 7.

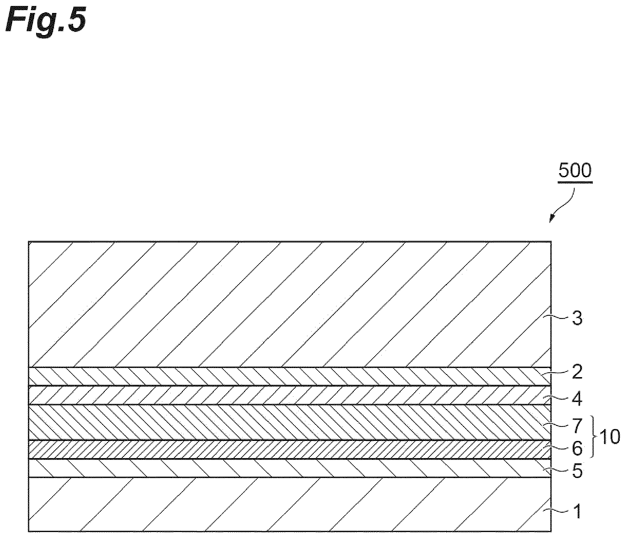

FIG. 5 is a schematic cross-sectional view illustrating a laminate according to still another embodiment. A laminate 500 illustrated in FIG. 5 further includes the print layer 4 between the gas barrier layer 10 and the adhesive layer 2 in the laminate 400 illustrated in FIG. 4.

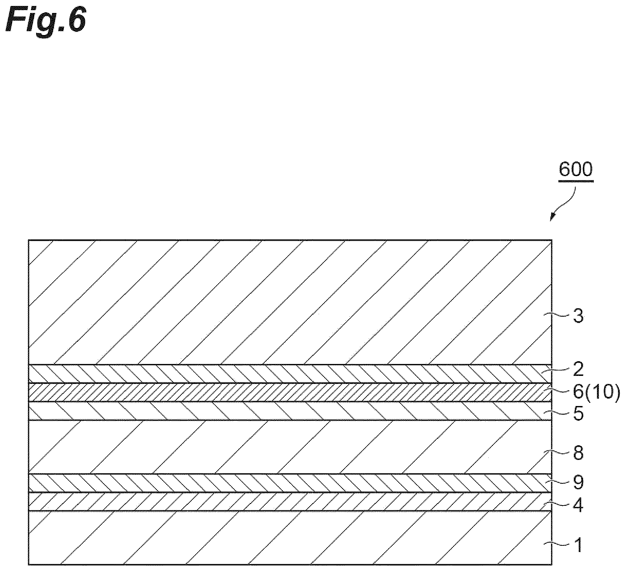

FIG. 6 is a schematic cross-sectional view illustrating a laminate according to still another embodiment. A laminate 600 illustrated in FIG. 6 includes the substrate layer 1, the print layer 4, an adhesive layer 9, a resin layer 8, the undercoat layer 5, the gas barrier layer 10 including the vapor deposition layer 6, the adhesive layer 2, and the sealant layer 3 in this order.

In the laminates 100, 200, 300, 400, 500, and 600, both of the substrate layer 1 and the sealant layer 3 are formed from an unstretched film containing a polyethylene as a main component. Furthermore, in the laminate 600, the resin layer 8 is formed from an unstretched film containing a polyethylene as a main component. Here, the term "main component" refers to a component whose content percentage in the unstretched film is 50% by mass or more. Furthermore, in the laminates 100, 200, 300, 400, 500, and 600, the substrate layer 1 is one outermost layer of the laminate, and the sealant layer is the other outermost layer of the laminate. Hereinafter, each layer constituting the laminate will be described.

[Substrate layer 1]

The substrate layer 1 is a layer serving as a support and is formed from an unstretched film containing a polyethylene having a density of $0.940$ g/cm$^3$ or more as a main component. The content of polyethylene in the substrate layer 1 may be 50% by mass or more, may be 80% by mass or more, and may be 100% by mass, on the basis of the total amount of the substrate layer 1. From the viewpoint of recyclability, it is preferable to use a polyethylene as a material for the substrate layer 1. Furthermore, as the content of polyethylene in the substrate layer 1 becomes higher, recyclability is improved.

The polyethylene contained in the substrate layer 1 may be an acid-modified polyethylene obtained through graft modification using unsaturated carboxylic acid, an acid anhydride of unsaturated carboxylic acid, an ester of unsaturated carboxylic acid, or the like.

The density of polyethylene contained in the substrate layer 1 is $0.940$ g/cm$^3$ or more, preferably $0.945$ g/cm$^3$ or more, and more preferably $0.950$ g/cm$^3$ or more. When the density of polyethylene is $0.940$ g/cm$^3$ or more, only the sealant layer 3 is easily fused during heat sealing when the laminate is formed into a bag shape, so that bag-making suitability becomes favorable. Furthermore, when the density of polyethylene is $0.940$ g/cm$^3$ or more, printing suitability becomes favorable in the case of forming the print layer 4 on the substrate layer 1. Furthermore, when the density of polyethylene is $0.940$ g/cm$^3$ or more, it is easy to prevent the substrate layer 1 from being elongated during roll processing to form wrinkles, and it is easy to prevent cracks from being generated on the vapor deposition layer 6 in the case of providing the vapor deposition layer 6 on the substrate layer 1.

The configuration of the substrate layer 1 may be a multi-layer configuration including a plurality of unstretched films each containing a polyethylene having a different density as a main component. The substrate layer 1 may be appropriately multi-layered in consideration of processing suitability, rigidity or firmness, heat resistance, particle fall-off during transportation, and the like of the film constituting the substrate layer 1. Note that, it is necessary that the density is $0.940$ g/cm$^3$ or more when the density of the film as the substrate layer 1 is measured. Furthermore, lamination may be performed while the contents of a slipping agent, an antistatic agent, and the like are changed for each layer. The substrate layer 1 including a plurality of layers can be laminated by extrusion coating, coextrusion coating, sheet molding, coextrusion blow molding, or the like and formed into a film. The total thickness of the substrate layer 1 including a plurality of layers is preferably about 10 to 100 $\mu$m and more preferably 15 to 50 $\mu$m.

The molecular orientation ratio (MOR) of the unstretched film constituting the substrate layer 1 may be 1.07 or less, may be 1.05 or less, and may be 1.04 or less. As the molecular orientation ratio becomes lower, the film is excellent in isotropy. When the molecular orientation ratio is 1.07 or less, the adhesion (peeling resistance) of the substrate layer 1 in the laminate is likely to be favorable. The molecular orientation ratio can be measured by a molecular orientation meter.

The heat shrinkage rates in a running direction (MD direction) and a vertical direction (TD direction) of the substrate layer 1 after being heated at 100°C for 15 minutes are preferably 3% or less, more preferably 2% or less, and further preferably 1.5% or less. When the heat shrinkage rate of the substrate layer 1 is within the above range, it is easy to prevent the substrate layer 1 from being elongated during roll processing to form wrinkles, and it is easy to prevent cracks from being generated on the vapor deposition layer 6.

Here, the heat shrinkage rate (%) refers to a value calculated by the following formula.

$$\text{Heat shrinkage rate (\%)} = \{(\text{Length before heating - Length after heating})/\text{Length before heating}\} \times 100$$

The measurement procedures of the heat shrinkage rate is as follows.

(1) The substrate layer 1 is cut into a size of 20 cm $\times$ 20 cm to obtain a measurement sample.
(2) A 10-cm line is drawn in the MD direction or TD direction of the measurement sample (length before heating).
(3) The measurement sample is heated at 100°C for 15 minutes.
(4) The length of the drawn line in the MD direction or TD direction is measured (length after heating).
(5) The heat shrinkage rate is calculated by the above formula.

The thickness of the substrate layer 1 is not particularly limited. The thickness can be set to 6 to 200 $\mu$m depending on use application, but from the viewpoint of obtaining excellent impact resistance and excellent bag-making suitability, the thickness may be 9 to 50 $\mu$m and may be 12 to 38 $\mu$m.

From the viewpoint of improving adhesion with the adhesive layer 2, the print layer 4, the undercoat layer 5, or the vapor deposition layer 6, the lamination surface of the substrate layer 1 may be subjected to various pre-treatments such as a corona treatment, a plasma treatment, a cold plasma treatment, a flame treatment, a chemical treatment, a solvent treatment, and an ozone treatment or may be provided with a coat layer such as an adhesion-facilitating layer, as long as the barrier performance is not impaired.

The substrate layer 1 may contain additives such as a filler, an anti-blocking agent, an antistatic agent, a plasticizer, a lubricant, and an antioxidant. Any one of these additives may be used singly or two or more kinds thereof may be used in combination.

[Undercoat layer 5]

The undercoat layer (anchor coat layer) 5 may be provided on the surface of the substrate layer 1 on which the vapor deposition layer 6 is laminated. The undercoat layer 5 can exhibit effects of improving the adhesion between the substrate layer 1 and the vapor deposition layer 6, improving the smoothness of the surface of the substrate layer 1, and suppressing occurrence of cracking of the vapor deposition layer 6 caused by the elongation of the substrate layer 1. Note that, when smoothness is improved, the vapor deposition layer 6 is easily formed into a uniform film without defects, and high barrier properties are easily exhibited. The undercoat layer 5 can be formed by using a composition for forming an undercoat layer (anchor coating agent).

Examples of the resin used in the anchor coating agent include an acrylic resin, an epoxy resin, an acrylic urethane-based resin, a polyester-based polyurethane resin, and a polyether-based polyurethane resin. As the resin used in the anchor coating agent, from the viewpoint of heat resistance and interlayer adhesion strength, an acrylic urethane-based resin and a polyester-based polyurethane resin are preferable. The undercoat layer 5 can be formed by using an anchor coating agent containing these resins or a component forming these resins through reaction.

The thickness of the undercoat layer 5 is not particularly limited, and is preferably in a range of 0.01 to 5 $\mu$m, more preferably in a range of 0.03 to 3 $\mu$m, and particularly preferably in a range of 0.05 to 2 $\mu$m. When the thickness of the undercoat layer 5 is the lower limit value or more, a more sufficient interlayer adhesion strength tends to be obtainable; on the other hand, when the thickness thereof is the upper limit value or less, desired gas barrier properties tends to be easily exhibited.

As a method of coating the undercoat layer 5 on the substrate layer 1, a known coating method can be used without particular limitation, and examples thereof include an immersion method (dipping method); and methods using a sprayer, a coater, a printer, a brush, and the like. Furthermore, examples of types of coaters and printers used in these methods and coating types thereof may include a gravure coater of a direct gravure type, a reverse gravure type, a kiss reverse gravure type, an offset gravure type, or the like; a reverse-roll coater; a micro gravure coater; a combined chamber and doctor coater; an air-knife coater; a dip coater; a bar coater; a comma coater; a die coater; and the like.

As the coating amount of the undercoat layer 5, the mass per 1 m$^2$ after coating and drying the anchor coating agent is preferably 0.01 to 5 g/m$^2$ and more preferably 0.03 to 3 g/m$^2$. When the mass per 1 m$^2$ after coating and drying the anchor coating agent is the lower limit value or more, the film formation tends to be sufficient; on the other hand, when the mass is upper limit value or less, there are tendencies that drying is likely to be sufficiently performed and the solvent is difficult to remain.

The method of drying the undercoat layer 5 is not particularly limited, and examples thereof may include a natural drying method, a method of drying in an oven set at a predetermined temperature, and a method using a drying device equipped with the above-described coater such as an arch dryer, a floating dryer, a drum dryer, or an infrared dryer. Further, drying conditions can be appropriately selected depending on a drying method, and for example, in a method of drying in an oven, drying is preferably performed at a temperature of 60 to 100°C for about 1 second to 2 minutes.

Instead of the aforementioned resin, a polyvinyl alcohol-based resin can be used as the undercoat layer 5. Any polyvinyl alcohol-based resin may be used as long as it has a vinyl alcohol unit obtained by saponifying a vinyl ester unit, and examples thereof include polyvinyl alcohol (PVA) and an ethylene-vinyl alcohol copolymer (EVOH).

Examples of the PVA include resins obtained by polymerizing a vinyl ester, such as vinyl acetate, vinyl formate, vinyl propionate, vinyl valerate, vinyl caprate, vinyl laurate, vinyl stearate, vinyl pivalate, or vinyl versatate, alone and then saponifying the resultant polymer. The PVA may be a modified PVA that is subjected to copolymerization modification or post-modification. The modified PVA is obtained, for example, by copolymerizing a vinyl ester and an unsaturated monomer copolymerizable with the vinyl ester and then saponifying the resulting copolymer. Examples of the unsaturated monomer copolymerizable with the vinyl ester include olefins such as ethylene, propylene, isobutylene, $\alpha$-octene, $\alpha$-dodecene, and $\alpha$-octadecene; hydroxyl group-containing $\alpha$-olefins such as 3-buten-1-ol, 4-pentyn-1-ol, and 5-hexen-1-ol; unsaturated acids such as acrylic acid, methacrylic acid, crotonic acid, maleic acid, maleic anhydride, itaconic acid, and undecylenic acid; nitriles such as acrylonitrile and methacrylonitrile; amides such as diacetone acrylamide, acrylamide, and methacrylamide; olefin sulfonic acids such as ethylene sulfonic acid, allyl sulfonic acid, and methallyl sulfonic acid; vinyl compounds such as alkyl vinyl ether, dimethylallyl vinyl ketone, N-vinylpyrrolidone, vinyl chloride, vinylethylene carbonate, 2,2-dialkyl-4-vinyl-1,3-dioxolane, glycerol monoallyl ether, 3,4-diacetoxy-1-butene; and vinylidene chloride, 1,4-diacetoxy-2-butene, and vinylene carbonate.

The polymerization degree of the PVA is preferably 300 to 3000. When the polymerization degree is 300 or more, barrier properties are likely to be improved, and when the polymerization degree is 3000 or less, degradation in coating suitability due to an excessively high viscosity is likely to be curbed. The saponification degree of the PVA is preferably 90 mol% or more, more preferably 95 mol% or more, and further preferably 99 mol% or more. Furthermore, the saponification degree of the PVA may be 100 mol% or less or 99.9 mol% or less. The polymerization degree and the saponification degree of the PVA can be measured according to methods described in JIS K 6726 (1994).

Examples of the EVOH is generally obtained by saponifying a copolymer of ethylene and an acid vinyl ester such as vinyl acetate, vinyl formate, vinyl propionate, vinyl valerate, vinyl caprate, vinyl laurate, vinyl stearate, vinyl pivalate, or vinyl versatate.

The polymerization degree of the EVOH is preferably 300 to 3000. When the polymerization degree is 300 or more, barrier properties are likely to be improved, and when the polymerization degree is 3000 or less, degradation in coating suitability due to an excessively high viscosity is likely to be curbed. The saponification degree of the vinyl ester component of the EVOH is preferably 90 mol% or more, more preferably 95 mol% or more, and further preferably 99 mol% or more. Furthermore, the saponification degree of the EVOH may be 100 mol% or less or 99.9 mol% or less. The saponification degree of the EVOH is determined from a peak area of the hydrogen atom contained in the vinyl ester structure and a peak area of the hydrogen atom contained in the vinyl alcohol structure by performing nuclear magnetic resonance ($^1$H-NMR) measurement.

The ethylene unit content of the EVOH is 10 mol% or more, more preferably 15 mol% or more, further preferably 20 mol% or more, and particularly preferably 25 mol% or more. Furthermore, the ethylene unit content of the EVOH is preferably 65 mol% or less, more preferably 55 mol% or less, and further preferably 50 mol% or less. When the ethylene unit content is 10 mol% or more, gas barrier properties or dimension stability at a high humidity can be satisfactorily maintained. On the other hand, when the ethylene unit content is 65 mol% or less, gas barrier properties can be enhanced. The ethylene unit content of the EVOH can be obtained by the NMR method.

In the case of using a polyvinyl alcohol-based resin as the undercoat layer 5, examples of the method of forming the undercoat layer 5 include application using a polyvinyl alcohol-based resin solution and multi-layer extrusion.

[Vapor deposition layer 6]

Examples of the constituent material for the vapor deposition layer 6 include inorganic oxides such as aluminum oxide, silicon oxide, magnesium oxide, and tin oxide. From the viewpoint of transparency and barrier properties, the inorganic oxide may be selected from the group consisting of aluminum oxide, silicon oxide, and magnesium oxide. Furthermore, from the viewpoint of tensile stretching properties during processing, the vapor deposition layer 6 is preferably a layer containing silicon oxide. By using the vapor deposition layer 6, high barrier properties can be obtained with an extremely thin layer in a range that does not affect the recyclability of the laminate.

An O/Si ratio of the vapor deposition layer 6 is desirably 1.7 or more. When the O/Si ratio is 1.7 or more, the content ratio of metal Si is suppressed so that favorable transparency is easily obtained. Furthermore, the O/Si ratio is preferably 2.0 or less. When the O/Si ratio is 2.0 or less, the vapor deposition layer 6 can be prevented from becoming excessively hard due to high crystallinity of SiO, and thus favorable tensile resistance is obtained. Thereby, it is possible to suppress occurrence of cracks on the vapor deposition layer 6 when the adhesive layer 2 is laminated. Furthermore, although the substrate layer 1 may be contracted due to heat at the time of a boiling treatment even after being molded in the packaging bag, when the O/Si ratio is 2.0 or less, the vapor deposition layer 6 is likely to follow the contraction, and deterioration of barrier properties can be suppressed. From the viewpoint of more sufficiently obtaining these effects, the O/Si ratio of the vapor deposition layer 6 is preferably 1.75 or more and 1.9 or less and more preferably 1.8 or more and 1.85 or less.

The O/Si ratio of the vapor deposition layer 6 can be determined by X-ray photoelectron spectroscopy (XPS). For example, the O/Si ratio can be measured with an X-ray photoelectron spectrometer (manufactured by JEOL Ltd., trade name: JPS-90MXV) as a measuring apparatus by using non-monochromatic MgKoc (1253.6 eV) as an X-ray source at an X-ray output of 100 W(10 kV-10 mA). For the quantitative analysis to determine the O/Si ratio, a relative sensitivity factor of 2.28 for O1s and a relative sensitivity factor of 0.9 for Si2p can be used.

The film thickness of the vapor deposition layer 6 is preferably 10 nm or more and 50 nm or less. When the film thickness is 10 nm or more, sufficient gas barrier properties can be obtained. Furthermore, when the film thickness is 50 nm or less, occurrence of cracks due to the deformation of the thin film by the internal stress is suppressed, and deterioration of gas barrier properties can be suppressed. Note that, when the film thickness is 50 nm or less, it is easy to suppress an increase in cost due to an increase in used amount of the material, an increase in time for film formation, and the like, which is also preferable from the economic viewpoint. From the same viewpoint as described above, the film thickness of the vapor deposition layer 6 is more preferably 20 nm or more and 40 nm or less.

The vapor deposition layer 6 can be formed, for example, by vacuum film formation. In the vacuum film formation, a physical vapor deposition method or a chemical vapor deposition method can be used. Examples of the physical vapor deposition method may include, but are not limited to, a vacuum deposition method, a sputtering method, and an ion plating method. Examples of the chemical vapor deposition method may include, but are not limited to, a thermal CVD method, a plasma CVD method, and a photo CVD method.

In the vacuum film formation, a resistive heating type vacuum deposition method, an electron beam (EB) heating type vacuum deposition method, an induction heating type vacuum deposition method, a sputtering method, a reactive sputtering method, a dual-magnetron sputtering method, a plasma chemical vapor deposition method (PECVD method), and the like are particularly preferably used. However, in consideration of productivity, a vacuum deposition method is more excellent at the moment. As a heating means in the vacuum deposition method, any of an electron beam heating method, a resistive heating method, an induction heating method is preferably used.

[Adhesive layer 2]

The adhesive layer 2 is provided at a position in contact with the sealant layer 3, and is a layer attaching the sealant layer 3 and another layer. The another layer is, for example, the substrate layer 1, the print layer 4, the vapor deposition layer 6, or the gas barrier coating layer 7.

As an adhesive constituting the adhesive layer 2, a known adhesive can be used. As a material for the adhesive, for example, a polyester-isocyanate-based resin, a urethane resin, a polyether-based resin, and the like can be used.

Furthermore, the adhesive layer 2 may be a gas-barrier adhesive layer having gas barrier properties. By providing the gas-barrier adhesive layer, the gas barrier properties of the laminate can be improved. In a case where the laminate does not have the gas barrier coating layer 7, the adhesive layer 2 is preferably a gas-barrier adhesive layer. The oxygen transmission rate of the gas-barrier adhesive layer is preferably 150 cc/m$^2$·day·atm or less, more preferably 100 cc/m$^2$·day·atm or less, further preferably 80 cc/m$^2$·day·atm or less, and particularly preferably 50 cc/m$^2$·day·atm or less. When the oxygen transmission rate is within the above range, the gas barrier properties of the laminate can be sufficiently improved. Furthermore, in a case where the gas-barrier adhesive layer is provided at a position in contact with the vapor deposition layer 6, when the oxygen transmission rate is within the above range, even if minor cracks are generated on the vapor deposition layer 6, the gas-barrier adhesive layer enters the gaps thereof so that cracks can be complemented, and deterioration of gas barrier properties can be suppressed.

The gas-barrier adhesive layer may be a layer formed from a cured product of a gas-barrier adhesive. The gas-barrier adhesive layer is formed by using a gas-barrier adhesive that can exhibit gas barrier properties after curing. Examples of the gas-barrier adhesive used in formation of the gas-barrier adhesive layer include an epoxy-based adhesive and polyester/polyurethane-based adhesive. Specific examples of the gas-barrier adhesive that can exhibit gas barrier properties after curing include "Maxive" manufactured by MITSUBISHI GAS CHEMICAL COMPANY, INC. and "Paslim" manufactured by DIC Corporation.

A logarithmic decrement at 30°C of the surface of the gas-barrier adhesive layer as measured by a rigid-body pendulum type physical property testing instrument is preferably 0.1 or less, more preferably 0.05 or less, and further preferably 0.03 or less. In a case where the gas-barrier adhesive layer is provided at a position in contact with the vapor deposition layer 6, when the logarithmic decrement in the surface of the gas-barrier adhesive layer is within the above range, the gas barrier properties of the laminate can be further improved, and deterioration of gas barrier properties after bending can be even further suppressed.

In a case where the gas-barrier adhesive layer is provided at a position in contact with the vapor deposition layer 6, the thickness of the gas-barrier adhesive layer is preferably 50 times or more the thickness of the vapor deposition layer 6. When the thickness of the gas-barrier adhesive layer is within the above range, cracking of the vapor deposition layer 6 can be more sufficiently suppressed, and gas barrier properties of the laminate can be further improved. Furthermore, when the thickness of the gas-barrier adhesive layer is within the above range, cushioning properties of alleviating impact from the outside can be obtained, and the vapor deposition layer 6 can be prevented from cracking due to impact. On the other hand, from the viewpoint of flexibility retention, processing suitability, and cost of the laminate, the thickness of the gas-barrier adhesive layer is preferably 300 times or less the thickness of the vapor deposition layer 6.

The thickness of the adhesive layer 2 is preferably 0.1 to 20 μm, more preferably 0.5 to 10 μm, and further preferably 1 to 5 μm. When the thickness of the adhesive layer 2 is the lower limit value or more, adhesion of the sealant layer 3 with another layer can be further improved. Furthermore, when the thickness of the adhesive layer 2 is the lower limit value or more, cushioning properties of alleviating impact from the outside can be obtained. On the other hand, when the thickness of the adhesive layer 2 is the upper limit value or less, there is a tendency that the flexibility of the laminate can be sufficiently maintained.

The adhesive for forming the adhesive layer 2 can be applied, for example, by a bar coating method, a dipping method, a roll coating method, a gravure coating method, a reverse coating method, an air-knife coating method, a comma coating method, a die coating method, a screen printing method, a spray coating method, a gravure offset method, or the like. The temperature when a coating film obtained by applying this adhesive is dried can be set to, for example, 30 to 200°C and is preferably set to 50 to 180°C. Furthermore, the temperature when the coating film is cured can be set to, for example, room temperature to 70°C and is preferably set to 30 to 60°C. By setting the temperatures at the time of drying and curing within the above ranges, occurrence of cracks on the vapor deposition layer 6 or the adhesive layer 2 can be even further suppressed, and excellent gas barrier properties and excellent adhesion between the sealant layer 3 and another layer can be exhibited.

In a case where the laminate includes the vapor deposition layer 6, the adhesive layer 2 and the vapor deposition layer 6 are preferably in direct contact with each other (without another layer interposed therebetween) from the viewpoint of preventing the vapor deposition layer 6 from cracking. For this reason, it is preferable to form the adhesive layer 2 by applying the adhesive onto the vapor deposition layer 6 and drying and curing the adhesive. Similarity, the vapor deposition layer 6 and the undercoat layer 5 are preferably in direct contact with each other (without another layer interposed therebetween) from the viewpoint of preventing the vapor deposition layer 6 from cracking.

[Gas barrier coating layer 7]

The gas barrier coating layer 7 is provided for protecting the vapor deposition layer 6 and contributing to improvement of gas barrier properties so that high gas barrier properties by a synergistic effect with the vapor deposition layer 6 are exhibited. The gas barrier coating layer 7 may contain a water-soluble polymer, may contain at least one of metal alkoxide and a hydrolysate thereof, and may contain a water-soluble polymer and at least one of metal alkoxide and a hydrolysate thereof. The water-soluble polymer may have a hydroxy group. The gas barrier coating layer 7 can be formed through a step of forming a coating film containing the above-described component on the surface of the vapor deposition layer 6.

Examples of the water-soluble polymer may include polyvinyl alcohol, polyvinylpyrrolidone, starch, methylcellulose, carboxymethylcellulose, and sodium alginate. Among these, polyvinyl alcohol (hereinafter, abbreviated as PVA) is preferable because polyvinyl alcohol makes it possible to obtain excellent gas barrier properties of the gas barrier coating layer 7. PVA described herein is generally obtained by saponification of polyvinyl acetate, and for example, a so-called partially saponified PVA in which several tens percent of an acetic acid group remains, a complete PVA in which only a few percent of acetic acid group remains, and the like can be used. The water-soluble polymer may constitute an organic-inorganic complex together with the metal alkoxide and/or a hydrolysate thereof by hydrolysis and dehydration-condensation (for example, a sol-gel method).

The metal alkoxide is a compound represented by the following general formula.

$$M(OR)_n$$

(M represents a metal atom such as Si, Ti, Al, or Zr, R represents an alkyl group such as $-CH_3$ or $-C_2H_5$, and n represents an integer corresponding to the valence of M.)

Specific examples thereof include tetraethoxysilane $[Si(OC_2H_5)_4]$ and triisopropoxy aluminum $[Al(O\text{-}iso\text{-}C_3H_7)_3]$. Tetraethoxysilane and triisopropoxy aluminum are preferable because they are relatively stable in an aqueous solvent after hydrolysis. Examples of a hydrolysate and a polymer of the metal alkoxide include the following compounds.

· Hydrolysate and polymer of tetraethoxysilane: silicic acid $(Si(OH)_4)$ or the like

· Hydrolysate and polymer of tripropoxy aluminum: aluminum hydroxide $(Al(OH)_3)$ or the like

The gas barrier coating layer 7 may further contain a silane coupling agent. Examples of the silane coupling agent include a compound represented by the following general formula.

$$R^1Si(OR^2)_n$$

($R^1$ represents an organic functional group, and $R^2$ represents an alkyl group such as $CH_3$ or $C_2H_5$.)

Specific examples thereof include silane coupling agents such as ethyltrimethoxysilane, vinyltrimethoxysilane, γ-chloropropylmethyldimethoxysilane, γ-chloropropyltrimethoxysilane, glycidoxypropyltrimethoxysilane, γ-methacryloxypropyltrimethoxysilane, and γ-methacryloxypropylmethyldimethoxysilane. Further, an isocyanate compound, or known additives such as a dispersant, a stabilizer, a viscosity modifier, and a colorant can also be added to the gas barrier coating layer 7 as necessary as long as the gas barrier properties of the gas barrier coating layer are not impaired.

The thickness (film thickness) of the gas barrier coating layer 7 is preferably within a range of 50 to 1000 nm and more preferably within a range of 100 to 500 nm. When the film thickness is 50 nm or more, there is a tendency that more sufficient gas barrier properties can be obtained, and when the film thickness is 1000 nm or less, there is a tendency that sufficient flexibility can be maintained.

Examples of a solvent used for forming a coating film include water, methyl alcohol, ethyl alcohol, isopropyl alcohol, n-propyl alcohol, n-butyl alcohol, n-pentyl alcohol, dimethyl sulfoxide, dimethylformamide, dimethylacetamide, toluene, hexane, heptane, cyclohexane, acetone, methyl ethyl ketone, diethyl ether, dioxane, tetrahydrofuran, ethyl acetate, and butyl acetate. One kind of these solvents may be used singly or two or more kinds thereof may be used in combination. Among these, from the viewpoint of coatability, methyl alcohol, ethyl alcohol, isopropyl alcohol, toluene, ethyl acetate, methyl ethyl ketone, and water are preferable. Furthermore, from the viewpoint of manufacturability, methyl alcohol, ethyl alcohol, isopropyl alcohol, and water are preferable.

An isocyanate compound or additives such as a silane coupling agent, a dispersant, a stabilizer, a viscosity modifier, and a colorant may be added to the coating liquid as necessary as long as the gas barrier properties are not impaired. For example, from the viewpoint of hot water resistance improvement, a silane compound (silane coupling agent) represented by formula $(R^1Si(OR^2)_3)n$ may be added to the coating liquid. The organic functional group $(R^1)$ is preferably a non-aqueous functional group such as vinyl, epoxy, methacryloxy, ureido, and isocyanate. Specific examples of the silane coupling agent include 1,3,5-tris(3-trialkoxysilylalkyl) isocyanurate, 3-glycidoxypropyltrimethoxysilane, and 2-(3,4-epoxycyclohexyl) ethyltrimethoxysilane.

The gas barrier coating layer 7 can be formed through a step of applying a coating liquid onto the surface of the vapor deposition layer 6. As the application method, conventionally known methods, such as a normally used casting method, a dipping method, a roll coating method, a gravure coating method, a screen printing method, a reverse coating method, a spray coating method, a kit coating method, a die coating method, a metering bar coating method, a combined chamber and doctor coating method, and a curtain coating method, can be used. The gas barrier coating layer 7 is formed by heating and drying the coating film formed by applying the coating liquid.

[Sealant layer 3]

The sealant layer 3 is a layer formed from an unstretched film containing a polyethylene as a main component. The content of polyethylene in the sealant layer 3 may be 50% by mass or more, may be 80% by mass or more, and may be 100% by mass, on the basis of the total amount of the sealant layer 3. The sealant layer 3 is a layer imparting sealing properties by heat sealing in the laminate.

As a material for the sealant layer 3, specifically, a low-density polyethylene resin (LDPE), a medium-density polyethylene resin (MDPE), a linear low-density polyethylene resin (LLDPE), and the like can be used. These polyethylene resins can be appropriately selected depending on use application and temperature condition of a boiling treatment or the like.

The polyethylene contained in the sealant layer 3 may be an acid-modified polyethylene obtained by graft-modifying a polyethylene using unsaturated carboxylic acid, an acid anhydride of unsaturated carboxylic acid, an ester of unsaturated carboxylic acid, or the like.

The density of polyethylene contained in the sealant layer 3 is preferably lower than the density of polyethylene contained in the substrate layer 1, more preferably less than 0.94 $g/cm^3$, and further preferably 0.90 to 0.925 $g/cm^3$. When the density condition is satisfied, only the sealant layer 3 is easily fused during heat sealing when the laminate is formed into a bag shape, so that bag-making suitability becomes favorable.

The configuration of the sealant layer 3 may be a multi-layer configuration including a plurality of unstretched films each containing a polyethylene having a different density as a main component. The sealant layer 3 may be appropriately multi-layered in consideration of processing suitability, rigidity or firmness, heat resistance, particle fall-off during transportation, and the like of the film constituting the sealant layer 3. Note that, the density is preferably less than the density of the substrate layer 1 when the density of the film as the sealant layer 3 is measured. Furthermore, lamination may be performed while the contents of additives described below, and the like are changed for each layer. The sealant layer 3 including a plurality of layers can be laminated by extrusion coating, coextrusion coating, sheet molding, coextrusion blow molding, or the like and formed into a film.

Various additives, such as a flame retardant, a slipping agent, an anti-blocking agent, an antioxidant, a light stabilizer, and a tackifier, may be added to the sealant layer 3.

The thickness of the sealant layer 3 is determined according to the mass of packaged contents, the shape of the packaging bag, or the like, and the thickness thereof is preferably approximately 30 to 150 μm.

Examples of the method of forming the sealant layer 3 include a method of pasting the unstretched film containing a polyethylene as a main component with the aforementioned adhesive for forming the adhesive layer 2.

From the viewpoint of improving adhesion with the adhesive layer 2, the lamination surface of the sealant layer 3 may be subjected to various pre-treatments such as a corona treatment, a plasma treatment, a cold plasma treatment, a flame treatment, a chemical treatment, a solvent treatment, and an ozone treatment or may be provided with a coat layer such as an adhesion-facilitating layer.

[Print layer 4]

The print layer 4 is provided at a position that can be seen from the outside of the laminate, for the purpose of displaying information on packaged contents, identifying packaged contents, or improving designability of the packaging bag. A printing method and a printing ink are not particularly limited, and existing printing methods and printing inks are appropriately selected in consideration of printing suitability for a film, designability such as color tone, adhesion, safeness as food containers, and the like. As the printing method, for example, a gravure printing method, an offset printing method, a gravure offset printing method, a flexographic printing method, an inkjet printing method, and the like can be used. Of them, a gravure printing method can be preferably used from the viewpoint of productivity and high definition of pictorial patterns.

In order to enhance the adhesion of the print layer 4, the surface of the layer (the substrate layer 1 or the resin layer 8) on which the print layer 4 is formed may be subjected to various pre-treatments such as a corona treatment, a plasma treatment, and a flame treatment or may be provided with a coat layer such as an adhesion-facilitating layer.

Here, the lamination position of the print layer 4 is not particularly limited. The print layer 4 may be formed, for example, on the surface of the substrate layer 1 on the sealant layer 3 side. In a case where the laminate includes the gas barrier layer 10, the print layer 4 may be formed on the surface of the gas barrier layer 10 on the sealant layer 3 side. Furthermore, in a case where the laminate includes the resin layer 8, the print layer 4 may be formed on one surface of the resin layer 8. The print layer 4 may be formed in advance on the surface of the substrate layer 1 or the resin layer 8, and the substrate layer 1 or the resin layer 8 on which the print layer 4 has been formed may be laminated on another layer with the adhesive layer 2 or the adhesive layer 9 interposed therebetween.

[Resin layer 8]

The resin layer 8 is a layer formed from an unstretched film containing a polyethylene as a main component, the resin layer being disposed between the substrate layer 1 and the sealant layer 3. The content of polyethylene in the resin layer 8 may be 50% by mass or more, may be 80% by mass or more, and may be 100% by mass, on the basis of the total amount of the resin layer 8. The resin layer 8 can have the same configuration as that of the substrate layer 1. By providing the resin layer 8, a laminate with firmness can be formed. Furthermore, by providing the print layer 4 on one surface of the substrate layer 1 and the resin layer 8 and providing the gas barrier layer 10 on the other surface thereof, a substrate film forming the print layer 4 and a substrate film forming the gas barrier layer 10 can be divided. In this case, the risk of failure occurrence when the print layer is formed and the risk of failure occurrence when the gas barrier layer is formed can be divided, and a step in which a thermal load is applied to one substrate film can be reduced. Furthermore, by providing the resin layer 8, it is easy to provide the print layer 4 on the inner surface instead of the outer surface of the laminate.

Here, the lamination position of the resin layer 8 is not particularly limited as long as it is between the substrate layer 1 and the sealant layer 3. In a case where the laminate includes the gas barrier layer 10, the resin layer 8 may be disposed between the gas barrier layer 10 and the substrate layer 1. The resin layer 8 may be laminated on another layer with the adhesive layer 9 interposed therebetween.

[Adhesive layer 9]

As an adhesive constituting the adhesive layer 9, a known adhesive can be used. As a material for the adhesive, for example, a polyester-isocyanate-based resin, a urethane resin, a polyether-based resin, and the like can be used. Furthermore, as the adhesive, the aforementioned adhesive for forming the adhesive layer 2 may be used.

[Heat-fusing temperature of each layer]

In the aforementioned laminate, a difference in heat-fusing temperature between the substrate layer 1 and the sealant layer 3 is preferably 10°C or more, more preferably 15°C or more, and further preferably 20°C or more. By setting this difference in heat-fusing temperature within the above range, the laminate is easily molded into a packaging bag or the like by heat sealing.

The heat-fusing temperature of the substrate layer 1 is preferably higher than the heat-fusing temperature of the sealant layer, more preferably 100°C or more, and further preferably 120°C or more. When the heat-fusing temperature is the lower limit value or more, the laminate is easily molded into a packaging bag or the like by heat sealing.

Furthermore, the heat-fusing temperature of the sealant layer 3 is preferably lower than the heat-fusing temperature of the substrate layer 1, more preferably 130°C or less, and further preferably 110°C or less. When the heat-fusing temperature is the upper limit value or less, the laminate is easily molded into a packaging bag or the like by heat sealing.

Here, the heat-fusing temperature of each layer is a heat-sealing temperature of a layer to be measured, as measured by the measurement method according to JIS Z0238:1998. Specifically, when two layers to be measured are superimposed and heated with a heat sealing tester at a pressure of 0.2 MPa for 1 second, the minimum temperature at which the heat-sealed portion not peeled off by heat-fusing can be formed is regarded as the heat-fusing temperature.

[Laminate]

As described above, all films constituting the laminate can be a polyethylene film. It can be said that such a laminate is a (mono-material) packaging material composed of a single material having excellent recyclability. From this viewpoint, the content of polyethylene occupying the laminate is 90% by mass or more and preferably 92.5% by mass or more.

The thickness of the laminate can be appropriately determined depending on use application thereof. The thickness of the laminate can be set to, for example, 0.01 to 10 mm and preferably 0.1 to 1.0 mm.

A lamination strength of the laminate as measured on the basis of Determination of peel strength of bonded assemblies at 180° peel (JIS K6854-2, ISO8510-2) under the condition of a peel rate of 300 mm/min is preferably 2.5 N/15 mm or more. By this lamination strength being 2.5 N/15 mm or more, even in the case of forming a pouch filled with liquid as packaged contents, the pouch can be prevented from being broken when the pouch is dropped.

The laminate can be suitably used for various use applications such as a packaging product such a container or a bag, a sheet molded article such as a decorative sheet or a tray, an optical film, a resin plate, various label materials, a lid material, and a laminate tube, and particularly suitably used for a packaging product. Examples of the packaging product include a pillow bag, a standing pouch, a three-side sealed bag, and a four-side sealed bag.

<Packaging bag>

A packaging bag is obtained by forming the aforementioned laminate into a bag. The packaging bag may be obtained by folding one laminate into two while sealant layers face each other and heat-sealing three sides to form the laminate into a bag shape, and may be obtained by superimposing two laminates while sealant layers face each other and heat-sealing four sides to form the laminate into a bag shape. The packaging bag can accommodate packaged contents such as food products and medicines as packaged contents. The packaging bag can be subjected to a heat sterilization treatment such as a boiling treatment.

The boiling treatment is a method of performing moist-heat sterilization for preserving food products, medicines, and the like. In general, depending on packaged contents, a packaging bag that packages a food product or the like is moist-heat sterilized at 60 to 100°C under atmospheric pressure for 10 to 120 minutes. The boiling treatment is usually performed at 100°C or less using a hot-water tank. As the method, there is a batch type method of immersing a package in a hot-water tank at a constant temperature and removing the package after processing has been performed for a certain time and a continuous method by which a package is treated by passing the package through a hot-water tank using a tunnel method. The packaging bag of the present embodiment can also be suitably used for application in which a boiling treatment is performed.

Furthermore, the packaging bag may have a shape with a bend part (bending part) such as a standing pouch. The packaging bag of the present embodiment can maintain high adhesion even when the packaging bag has a shape with a bend part.

[Second aspect]

<Laminate>

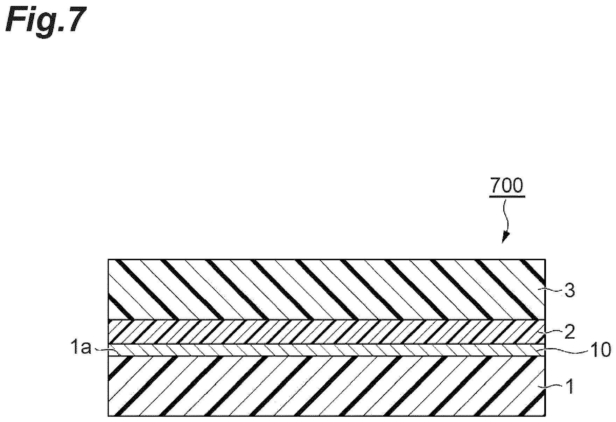

FIG. 7 is a schematic cross-sectional view illustrating a laminate 700 according to the present embodiment. The laminate 700 includes the substrate layer (substrate) 1, the gas barrier layer 10, the adhesive layer (adhesion layer) 2, and the sealant layer (heat seal layer) 3.

The substrate layer 1 is an unstretched film configured using a polyethylene. Thereby, shrinkage or curling of the laminate 700 during processing is suppressed, and workability of bag-making and filling and sealing steps can be stabilized. The haze value of the unstretched film is preferably 45% or less and more preferably 30% or less. The haze value in the present disclosure is defined as a value measured according to JIS K 7105. The unstretched film may be produced by a method described below and a commercially available product may be used.

An image may be formed on the surface of the substrate layer 1. When an image is formed on a first surface 1a on a side where the gas barrier layer 10 is formed, degradation over time due to contact with the outside air can be prevented, which is preferable. An image to be formed is not particularly limited and can be characters, patterns, symbols, combination thereof, and the like.

The image formation on the substrate layer is preferably performed by using a biomass-derived ink. Thereby, a more environmentally-friendly packaging material can be produced by using the laminate 700. The method of forming an image is not particularly limited, and examples thereof may include conventionally known various printing methods such as a gravure printing method, an offset printing method, and a flexographic printing method. Among these, from the viewpoint of environmental load, a flexographic printing method is preferable.

As the polyethylene contained in the substrate layer as a main component, a high-density polyethylene (HDPE), a medium-density polyethylene (MDPE), a low-density polyethylene (LDPE), a linear low-density polyethylene (LLDPE), and a very low-density polyethylene (VLDPE) can be used.

As the high-density polyethylene, a polyethylene having a density of 0.945 g/cm$^3$ or more can be used. As the medium-density polyethylene, a polyethylene having a density of 0.925 g/cm$^3$ or more and less than 0.945 g/cm$^3$ can be used. As the low-density polyethylene, a polyethylene having a density of 0.900 g/cm$^3$ or more and less than 0.925 g/cm$^3$ can be used. As the linear low-density polyethylene, a polyethylene having a density of 0.900 g/cm$^3$ or more and less than 0.925 g/cm$^3$ can be used. As the very low-density polyethylene, a polyethylene having a density of less than 0.900 g/cm$^3$ can be used. Among these, from the viewpoint of printing suitability, strength, and heat resistance, a high-density polyethylene is preferable.

The polyethylenes having different densities and branches as described above can be obtained by appropriately selecting a polymerization method. For example, the polymerization method is preferably performed in one step or in multiple steps of two or more steps, by either method of gas phase polymerization, slurry polymerization, solution polymerization, and high-pressure ion polymerization, using a multi-site catalyst such as a Ziegler-Natta catalyst or a single-site catalyst such as a metallocene-based catalyst as a polymerization catalyst.

The single-site catalyst refers to a catalyst capable of forming a uniform active species and is usually prepared by contacting a metallocene-based transition metal compound or a non-metallocene-based transition metal compound with a promoter for activation. The single-site catalyst has a uniform active site structure as compared with that of the multi-site catalyst and can polymerize polymers having a structure with a high molecular weight and high homogeneity, which is preferable. As the single-site catalyst, particularly, a metallocene-based catalyst is preferably used. The metallocene-based catalyst is a catalyst containing each of catalyst components including a transition metal compound of Group IV of the periodic table containing a ligand having a cyclopentadienyl skeleton, a promoter, an organometallic compound as necessary, and a carrier.

In the above transition metal compound of Group IV of the periodic table containing a ligand having a cyclopentadienyl skeleton, the cyclopentadienyl skeleton is a cyclopentadienyl group, a substituted cyclopentadienyl group, or the like. Examples of the substituted cyclopentadienyl group include those having at least one substituent selected from a hydrocarbon group having 1 to 30 carbon atoms, a silyl group, a silyl-substituted alkyl group, a silyl-substituted aryl group, a cyano group, a cyanoalkyl group, a cyanoaryl group, a halogen group, a haloalkyl group, a halosilyl group, and the like. The substituted cyclopentadienyl group may have two or more substituents, and the substituents may join together to form a ring, such as an indenyl ring, a fluorenyl ring, an azulenyl ring, or a hydrogenated product thereof. Rings formed by substituents joined together may each have further substituents.

In the transition metal compound of Group IV of the periodic table containing a ligand having a cyclopentadienyl skeleton, examples of the transition metal include zirconium, titanium and hafnium, and particularly, zirconium and hafnium are preferable. It is preferable that the transition metal compound usually has two ligands having a cyclopentadienyl skeleton and the ligands having a cyclopentadienyl skeleton are bound to each other via a crosslinking group. Note that, examples of the crosslinking group include an alkylene group having 1 to 4 carbon atoms, a silylene group, a substituted silylene group such as a dialkylsilylene group or a diarylsilylene group, and a substituted germylene group such as a dialkylgermylene group or, a diaryl germylene group. A substituted silylene group is preferable. For the above transition metal compound of Group IV of the periodic table containing a ligand having a cyclopentadienyl skeleton, the catalyst component may be a single or a mixture of two or more kinds thereof.

The promoter refers to those which can make the transition metal compound of Group IV of the periodic table effective as a polymerization catalyst or can balance ionic charges in a catalytically activated state. Examples of the promoter include a benzene-soluble aluminoxane of organoaluminum oxy compound or benzene-insoluble organoaluminum oxy compound, ion-exchangeable layered silicate, a boron compound, an ionic compound composed of a cation containing or not containing an active hydrogen group and a noncoordinating anion, lanthanoid salts such as lanthanum oxide, tin oxide, and a phenoxy compound containing a fluoro group.

The transition metal compound of Group IV of the periodic table containing a ligand having a cyclopentadienyl skeleton may be used in a state of being supported on a carrier which is an inorganic or organic compound. As the carrier, porous oxides of inorganic or organic compounds are preferable, and specific examples thereof include an ion-exchangeable layered silicate such as montmorillonite, $SiO_2$, $Al_2O_3$, $MgO$, $ZrO_2$, $TiO_2$, $B_2O_3$, $CaO$, $ZnO$, $BaO$, $ThO_2$, and mixtures thereof. Examples of the organometallic compound used as necessary include an organoaluminum compound, an organomagnesium compound, and an organozinc compound. Among these, organoaluminum is preferably used.

Copolymers of ethylene and other monomers can also be used as long as the characteristics of the present disclosure are not impaired. Examples of the ethylene copolymer include copolymers of ethylene and $\alpha$-olefin having 3 to 20 carbon atoms. Examples of the $\alpha$-olefin having 3 to 20 carbon atoms include propylene, 1-butene, 1-pentene, 1-hexene, 1-octene, 1-decene, 1-dodecene, 1-tetradecene, 1-hexadecene, 1-octadecene, 1-eicosene, 3-methyl-1-butene, 4-methyl-1-pentene, and 6-methyl-1-heptene. Furthermore, a copolymer with vinyl acetate or acrylate ester may be used as long as the object of the present disclosure is not impaired.

In the present disclosure, as a raw material for obtaining the high-density polyethylene or the like, a biomass-derived ethylene may be used instead of an ethylene obtained from fossil fuel. Since such a biomass-derived polyethylene is a carbon-neutral material, a more environmentally-friendly packaging material can be obtained. Such a biomass-derived polyethylene can be produced by the method described in, for example, Japanese Unexamined Patent Publication No. 2013-177531. Furthermore, a commercially available biomass-derived polyethylene (for example, Green PE commercially available from Braskem, or the like) may be used.

A polyethylene recycled by mechanical recycle can also be used in the substrate layer 1. Here, the mechanical recycle is generally a method in which a recovered polyethylene film or the like is pulverized and washed with alkali to remove dirt and foreign matter on the film surface, the film was dried for a certain time at a high temperature under reduced pressure to diffuse contaminants remaining inside the film and decontaminate the film, the dirt of the film formed from a polyethylene is removed, and the film is returned to polyethylene again.

The substrate layer 1 can contain an additive as long as the characteristics of the present disclosure are not impaired. Examples of the additive may include a crosslinking agent, an antioxidant, an anti-blocking agent, a lubricant (slipping agent), an ultraviolet absorber, a light stabilizer, a filler, a reinforcing agent, an antistatic agent, a pigment, and a modifier resin.

The thickness of the substrate layer 1 is preferable 10 $\mu$m or more and 50 $\mu$m or less and more preferably 12 $\mu$m or more and 35 $\mu$m or less. By setting the thickness of the substrate layer 1 to 10 $\mu$m or more, the strength of the laminate 700 can be improved. Furthermore, by setting the thickness of the substrate layer 1 to 50 $\mu$m or less, the processing suitability of the laminate 700 can be improved.

The substrate layer 1 can be produced by forming a polyethylene into a film by a T-die method, an inflation method, or the like.

In the case of producing the substrate layer 1 by a T-die method, a melt flow rate (MFR) of polyethylene is preferably 3 g/10 min or more and 20 g/10 min or less. By setting the MFR to 3 g/10 min or more, the processing suitability of the laminate 700 can be improved. Furthermore, by setting the MFR to 20 g/10 min or less, the produced substrate layer can be prevented from being broken.

In the case of producing the substrate layer 1 by an inflation method, the MFR of polyethylene is preferably 0.5 g/10 min or more and 5 g/10 min or less. By setting the MFR to 0.5 g/10 min or more, the processing suitability of the laminate 700 can be improved. Furthermore, by setting the MFR to 5 g/10 min or less, film formability can be improved.

The substrate layer 1 is preferably subjected to a surface treatment. The surface treatment method is not particularly limited, and examples thereof include a physical treatment such as a corona discharge treatment, an ozone treatment, a cold plasma treatment using oxygen gas and/or nitrogen gas, and a glow discharge treatment, and a chemical treatment, such as an oxidation treatment, using a chemical agent.

In a case where the laminate includes the gas barrier layer as described in the present embodiment, an anchor coat layer (undercoat layer) may be formed on the first surface 1a on which the gas barrier layer is formed, by using a known anchor coating agent. Thereby, the adhesion of the gas barrier layer formed from a metal oxide can be improved. Examples of the anchor coating agent may include a polyester-based polyurethane resin and a polyether-based polyurethane resin. From the viewpoint of heat resistance and interlayer adhesion strength, a polyester-based polyurethane resin is preferable.

The gas barrier layer 10 is provided on the first surface 1a side of the substrate layer 1 directly or with another layer interposed therebetween, and imparts oxygen barrier properties and water vapor barrier properties to the laminate 700.

Examples of the gas barrier layer include vapor deposition layers formed from metal oxides such as aluminum oxide, silicon oxide, magnesium oxide, and tin oxide. From the viewpoint of transparency and barrier properties, the metal oxide may be selected from the group consisting of aluminum oxide, silicon oxide, and magnesium oxide. Further, in consideration of printing suitability and cost, the metal oxide is selected from aluminum oxide and silicon oxide. Further, from the viewpoint of tensile stretching properties during processing, the gas barrier layer is more preferably a layer using silicon oxide. By using a vapor deposition layer formed from a metal oxide as a gas barrier layer, barrier properties can be obtained with an extremely thin layer in a range that does not affect the recyclability of the gas barrier laminate.

An O/A1 ratio in the case of selecting aluminum oxide as a vapor deposition layer is desirably 1.4 or more. When the O/A1 ratio is 1.4 or more, the content ratio of uncoupled bonds of aluminum atoms is suppressed so that favorable transparency is easily obtained. Furthermore, the O/Al ratio is preferably 1.7 or less. When the O/Al ratio is 1.7 or less, the vapor deposition layer can be prevented from becoming excessively hard due to high crystallinity of AIO, and thus favorable tensile resistance is obtained. In a packaging bag using the laminate 700, although the substrate layer 1 may be contracted due to heat at the time of a boiling treatment, when the O/A1 ratio of the gas barrier layer 10 is 1.7 or less, it is easy to follow the contraction, and deterioration of gas barrier properties caused by generation of cracks and the like on the gas barrier layer 10 can be suppressed. From the viewpoint of more sufficiently obtaining these effects, the O/Al ratio of the vapor deposition layer serving as the gas barrier layer 10 is preferably 1.4 or more and 1.7 or less and more preferably 1.5 or more and 1.55 or less.

The O/Si ratio in the case of selecting silicon oxide as a vapor deposition layer is desirably 1.7 or more. When the O/Si ratio is 1.7 or more, the content ratio of uncoupled bonds of silicon atoms is suppressed so that favorable transparency is easily obtained. Furthermore, the O/Si ratio is preferably 2.0 or less. When the O/Si ratio is 2.0 or less, the vapor deposition layer can be prevented from becoming excessively hard due to high crystallinity of SiO, and thus favorable tensile resistance is obtained. Furthermore, when the O/Si ratio of the gas barrier layer 10 is 2.0 or less, it is easy to follow the aforementioned contraction, and deterioration of gas barrier properties can be suppressed. From the viewpoint of more sufficiently obtaining these effects, the O/Si ratio of the vapor deposition layer serving as the gas barrier layer 10 is preferably 1.75 or more and 1.9 or less and more preferably 1.8 or more and 1.85 or less.

The film thickness of the vapor deposition layer formed from aluminum oxide is preferably 5 nm or more and 30 nm or less. When the film thickness is 5 nm or more, sufficient gas barrier properties can be obtained. Furthermore, when the film thickness is 30 nm or less, occurrence of cracks due to the deformation of the thin film by the internal stress is suppressed, and deterioration of gas barrier properties can be suppressed. Note that, when the film thickness exceeds 30 nm, cost is likely to increase due to an increase in used amount of the material, an increase in time for film formation, and the like, which is not preferable also from the economic viewpoint. From the same viewpoint as described above, the film thickness of the vapor deposition layer is more preferably 7 nm or more and 15 nm or less.

The film thickness of the vapor deposition layer formed from silicon oxide is preferably 10 nm or more and 50 nm or less. When the film thickness is 10 nm or more, sufficient gas barrier properties can be obtained. Furthermore, when the film thickness is 50 nm or less, occurrence of cracks due to the deformation of the thin film by the internal stress is suppressed, and deterioration of gas barrier properties can be suppressed. Note that, when the film thickness exceeds 50 nm, cost is likely to increase due to an increase in used amount of the material, an increase in time for film formation, and the like, which is not preferable also from the economic viewpoint. From the same viewpoint as described above, the film thickness of the vapor deposition layer is more preferably 20 nm or more and 40 nm or less.

The vapor deposition layer can be formed, for example, by vacuum film formation. In the vacuum film formation, a physical vapor deposition method or a chemical vapor deposition method can be used. Examples of the physical vapor deposition method may include, but are not limited to, a vacuum deposition method, a sputtering method, and an ion plating method. Examples of the chemical vapor deposition method may include, but are not limited to, a thermal CVD method, a plasma CVD method, and a photo CVD method.

In the vacuum film formation, a resistive heating type vacuum deposition method, an electron beam (EB) heating type vacuum deposition method, an induction heating type vacuum deposition method, a sputtering method, a reactive sputtering method, a dual-magnetron sputtering method, a plasma chemical vapor deposition method (PECVD method), and the like are particularly preferably used. However, in consideration of productivity, a vacuum deposition method is more excellent at the moment. As a heating means in the vacuum deposition method, any of an electron beam heating method, a resistive heating method, an induction heating method is preferably used.

In the case of forming an image, the image can also be formed on the gas barrier layer.

The adhesive layer 2 is a layer containing at least one adhesive, and is provided between the gas barrier layer 10 and the sealant layer 3 to bond both the layers. Any adhesive of one-liquid curable or two-liquid curable urethane-based adhesive, and the like can also be used for the adhesive layer 2. These adhesives may contain a layered inorganic compound for the purpose of further enhancing barrier properties.

The thickness of the adhesive layer 2 is preferably 0.5 $\mu$m or more and 6 $\mu$m or less, more preferably 0.8 $\mu$m or more and 5 $\mu$m or less, and further preferably 1 $\mu$m or more and 4.5 $\mu$m or less. By setting the thickness of the adhesive layer 2 to 0.5 $\mu$m or more, the adhesiveness of the adhesive layer 2 can be improved. By setting the thickness of the adhesive layer 2 to 6 $\mu$m or less, the processing suitability of the laminate 700 can be improved.

The adhesive layer 2 can be formed, for example, by known various methods such as a direct gravure roll coating method, a gravure roll coating method, a kiss coating method, a reverse roll coating method, a fountain coating method, and a transfer roll coating method.

The sealant layer 3 is configured by polyethylene and is bonded by heat fusing (heat sealing) when a packaging material such as a standing pouch is formed by using the laminate 700.

The polyethylene constituting the sealant layer 3 is preferably selected from the group consisting of a low-density polyethylene (LDPE), a linear low-density polyethylene (LLDPE), and a very low-density polyethylene (VLDPE), from the viewpoint of heat-sealability. The polyethylene of the substrate layer 1 and the polyethylene of the sealant layer 3 may be the same as or different from each other. Furthermore, from the viewpoint of environmental load, a biomass-derived polyethylene or recycled polyethylene are preferably used for the sealant layer.

In the sealant layer 3, copolymers of ethylene and other monomers can be used as long as the characteristics of the laminate 700 are not impaired.

The sealant layer 3 may be a single layer and may have a multi-layer structure. In the case of having a multi-layer structure, the sealant layer 3 may include a layer containing at least one of a medium-density polyethylene and a high-density polyethylene.

The sealant layer 3 can have, for example, a three-layer configuration composed of a layer containing at least any of a low-density polyethylene, a linear low-density polyethylene, and a very low-density polyethylene/a layer containing at least any of a medium-density polyethylene and a high-density polyethylene/a layer containing at least any of a low-density polyethylene, a linear low-density polyethylene, and a very low-density polyethylene. With such a configuration, the bag-making suitability and strength of the laminate 700 can be further improved while heat-sealability is maintained.

The thickness of the sealant layer 3 can be appropriately changed according to the weight of packaged contents to be filled in a packaging material to be produced, and the like. For example, in the case of producing a packaging bag filled with 1 g or more and 200 g or less of packaged contents, the thickness of the sealant layer 3 is preferably 20 $\mu$m or more and 60 $\mu$m or less. By setting the thickness to 20 $\mu$m or more, the filled packaged contents can be prevented from leaking due to breakage of the sealant layer 3. By setting the thickness to 60 $\mu$m or less, the processing suitability of the laminate 700 can be improved.

As another example, in the case of producing a standing pouch filled with 50 g or more and 2000 g or less of packaged contents, the thickness of the sealant layer 3 is preferably 50 $\mu$m or more and 200 $\mu$m or less. By setting the thickness to 50 $\mu$m or more, the filled packaged contents can be prevented from leaking due to breakage of the sealant layer 3. Furthermore, by setting the thickness to 200 $\mu$m or less, the processing suitability of the laminate 700 can be improved.

In the laminate 700 of the present embodiment configured as described above, when the substrate layer 1 and the sealant layer 3 are configured by a polyethylene, the proportion of polyethylene occupying the laminate 700 is 90% by mass or more. Thereby, the laminate 700 has high recyclability.

The proportion (%) of polyethylene occupying the laminate 700 can be calculated by Formula (1) below.

$$\text{(Mass of substrate layer 1 + Mass of sealant layer 3)/Mass of entire laminate} \times 100 \quad (1)$$

<Packaging bag and standing pouch>

In a state where one laminate 700 is bent while the sealant layers 3 face each other or two laminates 700 are superimposed while the sealant layers 3 face each other, when the sealant layer 3 of the edge portion is bonded by heat sealing with the filling portion of packaged contents remaining, a packaging bag formed from the laminate 700 can be formed.

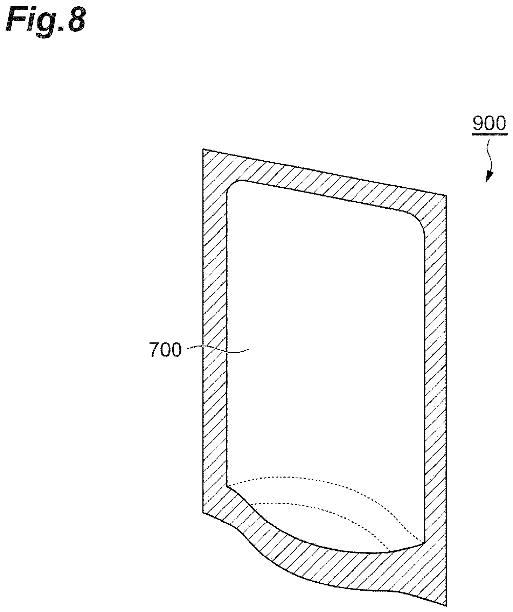

Bonding as described above is performed while the bent bottom film is sandwiched, so that a standing pouch 900 illustrated in FIG. 8 can be formed by using the laminate 700.

Various packaged contents such as solid, liquid, and gas can be accommodated in the aforementioned packaging bag or standing pouch.

The inventors have found that a standing pouch using the laminate described in Patent Literature 2 including a stretched high-density polyethylene film layer is easily broken due to impact when being dropped. This phenomenon is particularly likely to occur in a case where a liquid having flowability (including the case of containing a solid material) as packaged contents is filled and sealed.

As a result of studies of the inventors, in the broken standing pouch, the substrate layer was broken along the molecular chain. This is considered to be mainly because in the stretched high-density polyethylene film as the substrate layer, the crystal molecular chain is oriented in a certain direction. Further, it was also found that the orientation of the crystal molecular chain is aligned not only in a plane direction but also in a thickness direction, and according to this, interlayer peeling is likely to occur.

Although details are described below also in Examples, the inventors have succeeded in improving impact resistance while maintaining high recyclability by using an unstretched film in the substrate layer. In the unstretched film, the orientation of the crystal molecular chain is not aligned in a certain direction even in either the plane direction or the thickness direction. As a result, the pouch is less likely to be broken in one direction even when impact is applied, and adhesion strength between layers is also favorably maintained.

Note that, in the present disclosure, the unstretched polyethylene film refers to a film not subjected to a stretching treatment and means a polyethylene film having a structure in which sphere-shaped crystals (spherocrystals) having a size of about 10 to 100 $\mu$m configured by randomly folded polyethylene molecular chains are connected with amorphous molecules. These structures can be checked by observation with an electron scanning microscope (SEM), observation by X-ray diffractometry, or the like.

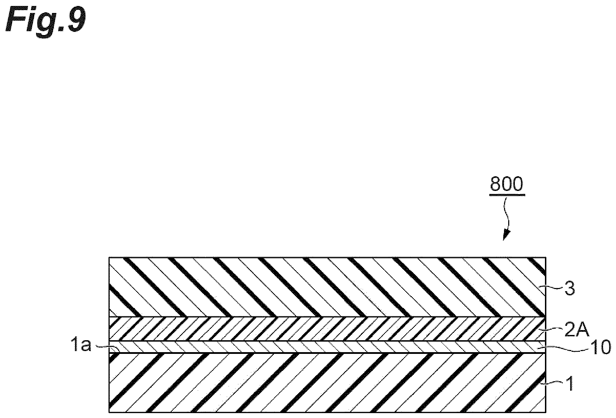

A second embodiment of the present disclosure will be described with reference to FIG. 9. In the following description, the same reference signs are assigned to configurations common in those already described above, and the duplicated description will be omitted.

FIG. 9 illustrates a laminate 800 according to the present embodiment. The laminate includes an adhesive layer 2A instead of the adhesive layer 2. The adhesive layer 2A is formed by a barrier adhesive (gas-barrier adhesive) that can exhibit gas barrier properties after curing.

Examples of the gas-barrier adhesive used in the adhesive layer 2A include an epoxy-based adhesive and polyester/polyurethane-based adhesive. Specific examples thereof include "Maxive" manufactured by MITSUBISHI GAS CHEMICAL COMPANY, INC. and "Paslim" manufactured by DIC Corporation.

The laminate 800 according to the present embodiment exhibits the same effect as that of the laminate 700 according to the first embodiment. Further, by including the adhesive layer 2A, the adhesive layer 2A protects the gas barrier layer and exhibits barrier properties independently of the gas barrier layer. Therefore, even when physical impact, such as rubbing occurring at the time of laminate production, thermal impact due to heat sealing at the time of standing pouch production or filling of packaged contents, or drop impact at the time of distribution of a packaging bag filled with packaged contents, is applied, occurrence of cracks on the gas barrier layer can be suppressed, and even if cracks are generated, barrier deterioration can be suppressed to the minimum.

In both of the first embodiment and the second embodiment, the gas barrier layer may include a gas barrier coating layer (overcoat layer). The gas barrier coating layer can be provided between the vapor deposition layer and the adhesive layer. The gas barrier coating layer protects the vapor deposition layer and exhibits barrier properties independently of the vapor deposition layer.

The gas barrier coating layer can be formed by using an aqueous solution containing at least one selected from the group consisting of a hydroxyl group-containing polymer compound, metal alkoxide, a silane coupling agent, and hydrolysates thereof or a composition for forming a gas barrier coating layer (hereinafter, also referred to as a coating agent) containing water/alcohol mixed solution as a main agent.

From the viewpoint of more sufficiently maintaining gas barrier properties after a hot water treatment such as a retort treatment, the coating agent preferably contains at least a silane coupling agent or a hydrolysate thereof, more preferably contains at least one selected from the group consisting of a hydroxyl group-containing polymer compound, metal alkoxide and hydrolysates thereof, and a silane coupling agent or a hydrolysate thereof, and further preferably contains a hydroxyl group-containing polymer compound or a hydrolysate thereof, metal alkoxide or a hydrolysate thereof, and a silane coupling agent or a hydrolysate thereof. The coating agent can be prepared, for example, by mixing metal alkoxide and a silane coupling agent directly or metal alkoxide and a silane coupling agent which have been subjected to hydrolysis or the like, with a solution obtained by dissolving a hydroxyl group-containing polymer compound as a water-soluble polymer in an aqueous (water or water/alcohol mixed) solvent.

Each component contained in the coating agent mentioned above will be described in detail. Examples of the hydroxyl group-containing polymer compound used in the coating agent include polyvinyl alcohol (PVA), polyvinylpyrrolidone, starch, methylcellulose, carboxymethylcellulose, and sodium alginate. When PVA is used in the coating agent, the gas barrier properties of the gas barrier coating layer is particularly excellent, which is preferable.

From the viewpoint of obtaining excellent gas barrier properties, the gas barrier coating layer is preferably formed from a composition containing at least one selected from the group consisting of a metal alkoxide represented by General Formula (I) below and a hydrolysate thereof.

$$M(OR^3)_m(R^4)_{n-m} \qquad (I)$$

Note that, in the above General Formula (I), $R^3$ and $R^4$ are each independently a monovalent organic group having 1 to 8 carbon atoms, and is preferably an alkyl group such as a methyl group and an ethyl group. M represents an n-valent metal atom such as Si, Ti, Al, or Zr. m is an integer of 1 to n. In a case where a plurality of $R^3$'s or $R^4$'s exist, $R^3$'s or $R^4$'s may be the same as or different from each other.

Specific examples of the metal alkoxide include tetraethoxysilane $[Si(OC_2H_5)_4]$ and triisopropoxy aluminum $[Al(O-2'-C_3H_7)_3]$. Tetraethoxysilane and triisopropoxy aluminum are preferable because they are relatively stable in an aqueous solvent after hydrolysis.

Examples of the silane coupling agent include a compound represented by General Formula (II) below.

$$Si(OR^{11})_p(R^{12})_{3-p}R^{13} \qquad (II)$$

Note that, in the above General Formula (II), $R^{11}$ represents an alkyl group such as a methyl group or an ethyl group. $R^{12}$ represents a monovalent organic group such as an alkyl group, an aralkyl group, an aryl group, an alkenyl group, an alkyl group substituted with an acryloxy group, or an alkyl group substituted with a methacryloxy group. $R^{13}$ represents a monovalent organic functional group. p represents an integer of 1 to 3. In a case where a plurality of $R^{11}$'s

or $R^{12}$'s exist, $R^{11}$'s or $R^{12}$'s may be the same as or different from each other. Examples of the monovalent organic functional group represented as $R^{13}$ include a monovalent organic functional group containing a glycidyloxy group, an epoxy group, a mercapto group, a hydroxyl group, an amino group, an alkyl group substituted with a halogen atom, or an isocyanate group.

Specific examples of the silane coupling agent include silane coupling agents such as vinyltrimethoxysilane, γ-chloropropylmethyldimethoxysilane, γ-chloropropyltrimethoxysilane, glycidoxypropyltrimethoxysilane, γ-methacryloxypropyltrimethoxysilane, and γ-methacryloxypropylmethyldimethoxysilane.

In the silane coupling agent, a polymer obtained by polymerization of the compound represented by the above General Formula (II) may be used. The polymer is preferably a trimer and more preferably 1,3,5-tris(3-trialkoxysilylalkyl) isocyanurate. This is a condensation polymer of 3-isocyanate alkyl alkoxysilane. This 1,3,5-tris(3-trialkoxysilylalkyl) isocyanurate has no chemical reactivity in the isocyanate moiety, but is known for ensuring reactivity by the polarity of the isocyanurate ring moiety. Generally, like 3-isocyanate alkyl alkoxysilane, 1,3,5-tris(3-trialkoxysilylalkyl) isocyanurate is added to an adhesive or the like, and is known as an adhesiveness improving agent. Therefore, by adding 1,3,5-tris(3-trialkoxysilylalkyl) isocyanurate to a hydroxyl group-containing polymer compound, the water resistance of the gas barrier coating layer can be improved by hydrogen bonding. Even though 3-isocyanate alkyl alkoxysilane has high reactivity and low liquid stability, the isocyanurate ring moiety of 1,3,5-tris(3-trialkoxysilylalkyl) isocyanurate is not water soluble due to the polarity, but 1,3,5-tris(3-trialkoxysilylalkyl) isocyanurate is easily dispersed in an aqueous solution, and the liquid viscosity can be stably maintained. Furthermore, the water resistance performance of 3-isocyanate alkyl alkoxysilane is equivalent to that of 1,3,5-tris(3-trialkoxysilylalkyl) isocyanurate.

1,3,5-tris(3-trialkoxysilylalkyl) isocyanurate is produced by thermal condensation of 3-isocyanate propyl alkoxysilane, and 3-isocyanate propyl alkoxysilane of a raw material is included in some cases; however, this poses no particular problem. Further, 1,3,5-tris(3-trialkoxysilylpropyl) isocyanurate is preferable, and 1,3,5-tris (3-trimethoxysilylpropyl) isocyanurate is more preferable. Since this methoxy group has a fast hydrolysis rate and those including a propyl group can be obtained at a comparatively low price, 1,3,5-tris (3-trimethoxysilylpropyl) isocyanurate is practically advantageous.

An isocyanate compound or known additives such as a dispersant, a stabilizer, a viscosity modifier, and a colorant may be added to the coating agent as necessary as long as the gas barrier properties are not impaired.

The thickness of the gas barrier coating layer is preferably 50 to 1000 nm and more preferably 100 to 500 nm. When the thickness of the gas barrier coating layer is 50 nm or more, there is a tendency that more sufficient gas barrier properties can be obtained, and when the thickness thereof is 1000 nm or less, there is a tendency that sufficient flexibility can be maintained.

A coating liquid for forming a gas barrier coating layer can be applied, for example, by a dipping method, a roll coating method, a gravure coating method, a reverse gravure coating method, an air-knife coating method, a comma coating method, a die coating method, a screen printing method, a spray coating method, a gravure offset method, or the like. A coating film obtained by applying this coating liquid can be dried, for example, by a hot-air drying method, a hot-roll drying method, a high frequency irradiation method, an infrared irradiation method, a UV irradiation method, or a combination thereof.

The temperature when the coating film is dried can be set to, for example, a temperature of 50 to 150°C and is preferably set to a temperature of 70 to 100°C. By setting the temperature at the time of drying within the above range, occurrence of cracks on the inorganic oxide layer (vapor deposition layer) or the gas barrier coating layer can be even further suppressed, and excellent barrier properties can be exhibited.

The gas barrier coating layer may be formed by using a coating agent containing a polyvinyl alcohol-based resin and a silane compound. An acid catalyst, an alkali catalyst, a photopolymerization initiator, and the like may be added as necessary to this coating agent.

As the polyvinyl alcohol-based resin, the aforementioned resin can be used. Examples of the silane compound include a silane coupling agent, polysilazane, siloxane, and specific examples thereof include tetramethoxysilane, tetraethoxysilane, glycidoxypropyltrimethoxysilane, acryloxypropyltrimethoxysilane, and hexamethyldisilazane.

**Examples**

The present disclosure will be described in more detail by means of Examples; however, the present disclosure is not limited to these Examples.

[Preparation of composition for forming undercoat layer]

An acrylic polyol and tolylene diisocyanate was mixed so that the number of NCO groups of the tolylene diisocyanate was equivalent to the number of OH groups of the acrylic polyol, and the mixture was diluted with ethyl acetate so that the total solid content (the total amount of the acrylic polyol and the tolylene diisocyanate) became 5% by mass. To the mixed solution after dilution, β-(3,4-epoxycyclohexyl) trimethoxysilane was further added so that β-(3,4-epoxycyclohexyl) trimethoxysilane was 5 parts by mass with respect to 100 parts by mass of the total amount of the acrylic polyol and the tolylene diisocyanate, and these components were mixed, thereby preparing a composition (anchor coating agent) AC-1 for forming an undercoat layer. In Table 2 and Table 3, the undercoat layer is described as "AC layer".

[Preparation of adhesive for forming adhesive layer]

(Adhesive A)

LX500/KR500 (trade name) manufactured by DIC Graphics Corporation that is a urethane-based adhesive was used as an adhesive A.

(Adhesive B)

An adhesive B, which is an epoxy-based adhesive, was prepared by mixing 16 parts by mass of Maxive C93T manufactured by MITSUBISHI GAS CHEMICAL COMPANY, INC. and 5 parts by mass of Maxive M-100 manufactured by MITSUBISHI GAS CHEMICAL COMPANY, INC. with 23 parts by mass of a solvent obtained by mixing ethyl acetate and methanol at a mass ratio of 1 : 1.

[Preparation of composition for forming gas barrier coating layer] (OC-1)

A solution described below was prepared and used as a coating liquid for forming a gas barrier coating layer. As the hydroxyl group-containing polymer compound, a polyvinyl alcohol resin (PVA, trade name: Selvol-325 (saponification degree: 98 to 99%, polymerization degree: 1700), manufactured by Sekisui Specialty Chemicals America, LLC.) was used. The polyvinyl alcohol resin and water were mixed and heated to 95°C to dissolve the polyvinyl alcohol resin in water. This mixture was cooled to room temperature and then diluted with water and isopropanol (mass ratio: 1 : 1) so that the final solid content concentration became 5% by mass, thereby preparing a composition OC-1 for forming a gas barrier coating layer. In Table 2 and Table 3, the gas barrier coating layer is described as "OC layer".

(OC-2)

An aqueous solution obtained by hydrolysis of each of an aqueous solution obtained by dissolving a polyvinyl alcohol resin (PVA, trade name: Poval PVA-105, manufactured by Kuraray Co., Ltd., polyvinyl alcohol having a saponification degree of 98 to 99% and a polymerization degree of 500), tetraethoxysilane (TEOS) and γ-glycidoxypropyltrimethoxysilane (GPTMS, trade name: KBM-403, manufactured by Shin-Etsu Chemical Co., Ltd.) with 0.02 mol/L of hydrochloric acid was prepared. This aqueous solution was obtained by blending PVA, TEOS, and GPTMS at a mass ratio before hydrolysis of 40 : 50 : 10. To this aqueous solution, isopropyl alcohol as a diluting solvent was added so that the solvent components were adjusted to have a mass ratio of water : isopropyl alcohol = 90 : 10, thereby preparing a composition OC-2 for forming a gas barrier coating layer having a solid content concentration of 5% by mass.

[Example 1-1]

The adhesive A was coated on a corona-treated surface of an A4 unstretched high-density polyethylene film subjected to a corona treatment (unstretched HDPE, density: 0.956 g/cm$^3$, thickness: 32 μm) serving as the substrate layer with a wire bar, and dried 60°C to form an adhesive layer having a thickness of 3 μm. Next, an unstretched film (unstretched LLDPE-1, density: 0.920 g/cm$^3$, manufactured by Mitsui Chemicals Tohcello, Inc., trade name: TUX-MCS) formed from a linear low-density polyethylene resin and having a thickness of 60 μm as the sealant layer was pasted. Thereafter, aging at 40°C for 4 days was performed. Thereby, a laminate having a lamination structure of the substrate layer/the adhesive layer/the sealant layer was obtained.

[Example 1-2]

A laminate having a lamination structure of the substrate layer/the adhesive layer/the sealant layer was obtained in the same manner as in Example 1-1, except that an A4 unstretched medium-density polyethylene film subjected to a corona treatment (unstretched HDPE, density: 0.940 g/cm$^3$, manufactured by TAMAPOLY CO., LTD., trade name: UB-3, thickness: 40 μm) was used as the substrate layer.

[Example 1-3]

A laminate having a lamination structure of the substrate layer/the adhesive layer/the sealant layer was obtained in the same manner as in Example 1-1, except that an unstretched film (unstretched LLDPE-2, density: 0.920 g/cm$^3$, manufactured by TAMAPOLY CO., LTD., trade name: UB-106) formed from a linear low-density polyethylene resin and having a thickness of 60 $\mu$m was used as the sealant layer.

[Comparative Example 1-1]

A laminate having a lamination structure of the substrate layer/the adhesive layer/the sealant layer was obtained in the same manner as in Example 1-1, except that an A4 stretched high-density polyethylene film subjected to a corona treatment (stretched HDPE-1, density: 0.960 g/cm$^3$, manufactured by TOKYO PRINTING INK MFG. CO., LTD., trade name: SMUQ, thickness: 25 $\mu$m) was used as the substrate layer.

[Comparative Example 1-2]

A laminate having a lamination structure of the substrate layer/the adhesive layer/the sealant layer was obtained in the same manner as in Example 1-1, except that an A4 stretched high-density polyethylene film subjected to a corona treatment (stretched HDPE-2, density: 0.960 g/cm$^3$, manufactured by Futamura Chemical Co., Ltd., trade name: PE3KH, thickness: 25 $\mu$m) was used as the substrate layer.

[Comparative Example 1-3]

A laminate having a lamination structure of the substrate layer/the adhesive layer/the sealant layer was obtained in the same manner as in Example 1-1, except that an A4 unstretched low-density polyethylene film subjected to a corona treatment (unstretched LLDPE-1, density: 0.920 g/cm$^3$, manufactured by Mitsui Chemicals Tohcello, Inc., trade name: TUX-MCS, thickness: 40 $\mu$m) was used as the substrate layer.

[Example 1-4]

A laminate having a lamination structure of the substrate layer/the adhesive layer/the sealant layer was obtained in the same manner as in Example 1-1, except that the adhesive B was used instead of the adhesive A.

[Example 1-5]

The composition AC-1 for forming an undercoat layer was coated on a corona-treated surface of an A4 unstretched high-density polyethylene film subjected to a corona treatment (unstretched HDPE, density: 0.956 g/cm$^3$, thickness: 32 $\mu$m) serving as the substrate layer with a wire bar, and dried and cured 60°C to form an undercoat layer having a coating amount of an acrylic urethane-based resin of 0.1 g/m$^2$.

A transparent vapor deposition layer (silica deposition film) formed from silicon oxide and having a thickness of 30 nm was formed on the undercoat layer by a vacuum deposition apparatus using an electron beam heating method. As the silica deposition film, a vapor deposition film having an O/Si ratio of 1.8 was formed by adjusting deposition material species.

The adhesive A was coated on the vapor deposition layer with a wire bar and dried at 60°C to form an adhesive layer having a thickness of 3 $\mu$m, and then an unstretched film (unstretched LLDPE-1, density: 0.920 g/cm$^3$, manufactured by Mitsui Chemicals Tohcello, Inc., trade name: TUX-MCS) formed from a linear low-density polyethylene resin (LLDPE) and having a thickness of 60 $\mu$m as the sealant layer was pasted. Thereafter, aging at 40°C for 4 days was performed. Thereby, a laminate having a lamination structure of the substrate layer/the undercoat layer/the vapor deposition layer/the adhesive layer/the sealant layer was obtained.

[Example 1-6]

A laminate having a lamination structure of the substrate layer/the undercoat layer/the vapor deposition layer/the gas barrier coating layer/the adhesive layer/the sealant layer was obtained in the same manner as in Example 1-5, except that the gas barrier coating layer was formed on the vapor deposition layer by the following procedure. That is, the composition OC-1 for forming a gas barrier coating layer was coated on the undercoat layer with a wire bar and dried at 60°C to form a gas barrier coating layer having a thickness of 0.3 $\mu$m.

[Example 1-7]

A laminate having a lamination structure of the substrate layer/the undercoat layer/the vapor deposition layer/the gas barrier coating layer/the adhesive layer/the sealant layer was obtained in the same manner as in Example 1-6, except that the composition OC-2 for forming a gas barrier coating layer was used instead of the composition OC-1 for forming a gas barrier coating layer.

[Example 1-8]

A laminate having a lamination structure of the substrate layer/the undercoat layer/the vapor deposition layer/the adhesive layer/the sealant layer was obtained in the same manner as in Example 1-5, except that the adhesive B was used instead of the adhesive A.

[Example 1-9]

A vapor deposition layer formed from aluminum and having a thickness of 50 nm was formed on a corona-treated surface of an A4 unstretched high-density polyethylene film subjected to a corona treatment (unstretched HDPE, density: 0.956 g/cm$^3$, thickness: 32 $\mu$m) serving as the substrate layer by a vacuum deposition apparatus using an induction heating method.

The adhesive B was coated on the vapor deposition layer with a wire bar and dried at 60°C to form an adhesive layer having a thickness of 3 $\mu$m, and then an unstretched film (unstretched LLDPE-1, density: 0.920 g/cm$^3$, manufactured by Mitsui Chemicals Tohcello, Inc., trade name: TUX-MCS) formed from a linear low-density polyethylene resin (LLDPE) and having a thickness of 60 $\mu$m as the sealant layer was pasted. Thereafter, aging at 40°C for 4 days was performed. Thereby, a laminate having a lamination structure of the substrate layer/the vapor deposition layer/the adhesive layer/the sealant layer was obtained.

[Example 1-10]

A laminate having a lamination structure of the substrate layer/the undercoat layer/the vapor deposition layer/the adhesive layer/the sealant layer was obtained in the same manner as in Example 1-8, except that the vapor deposition layer was formed by the following method. That is, a transparent vapor deposition layer (alumina deposition film) formed from aluminum oxide and having a thickness of 15 nm was formed on the undercoat layer by a vacuum deposition apparatus using an electron beam heating method. As the alumina deposition film, a vapor deposition film having an O/Al ratio of 1.5 was formed by adjusting deposition material species.

[Comparative Example 1-4]

A laminate having a lamination structure of the substrate layer/the undercoat layer/the vapor deposition layer/the gas barrier coating layer/the adhesive layer/the sealant layer was obtained in the same manner as in Example 1-7, except that an A4 stretched high-density polyethylene film subjected to a corona treatment (stretched HDPE-1, density: 0.960 g/cm$^3$, manufactured by TOKYO PRINTING INK MFG. CO., LTD., trade name: SMUQ, thickness: 25 $\mu$m) was used as the substrate layer.

[Example 1-11]

A laminate having a lamination structure of the substrate layer/the print layer/the adhesive layer/the sealant layer was obtained in the same manner as in Example 1-1, except that the print layer was formed on the substrate layer by the following procedure and an unstretched film (unstretched LLDPE-2, density: 0.920 g/cm$^3$, manufactured by TAMAPOLY CO., LTD., trade name: UB-106) formed from a linear low-density polyethylene resin and having a thickness of 60 $\mu$m was used as the sealant layer. That is, a pictorial pattern was printed on the substrate layer with a printer to form a print layer.

[Example 1-12]

A laminate having a lamination structure of the substrate layer/the undercoat layer/the vapor deposition layer/the gas barrier coating layer/the print layer/the adhesive layer/the sealant layer was obtained in the same manner as in Example 1-7, except that the print layer was formed on the gas barrier coating layer by the following procedure and an unstretched film (unstretched LLDPE-1, density: 0.920 g/cm$^3$, manufactured by Mitsui Chemicals Tohcello, Inc., trade name: TUX-MCS) formed from a linear low-density polyethylene resin and having a thickness of 60 $\mu$m was used as the sealant layer. That is, a pictorial pattern was printed on the gas barrier coating layer with a printer to form a print layer.

[Example 1-13]

A pictorial pattern was printed on a corona-treated surface of an A4 unstretched high-density polyethylene film subjected to a corona treatment (unstretched HDPE, density: 0.956 g/cm$^3$, thickness: 32 $\mu$m) serving as the substrate layer with a printer to form a print layer. Thereby, a first film attached with a print layer was obtained.

The composition AC-1 for forming an undercoat layer was coated on a corona-treated surface of an A4 unstretched high-density polyethylene film subjected to a corona treatment (unstretched HDPE, density: 0.956 g/cm$^3$, thickness: 32 $\mu$m) serving as the resin layer with a wire bar, and dried and cured 60°C to form an undercoat layer having a coating amount of an acrylic urethane-based resin of 0.1 g/m$^2$.

A transparent vapor deposition layer (silica deposition film) formed from silicon oxide and having a thickness of 30 nm was formed on the undercoat layer by a vacuum deposition apparatus using an electron beam heating method. As the silica deposition film, a vapor deposition film having an O/Si ratio of 1.8 was formed by adjusting deposition material species.

The adhesive B was coated on the vapor deposition layer with a wire bar and dried at 60°C to form an adhesive layer having a thickness of 3 $\mu$m, and then an unstretched film (unstretched LLDPE-1, density: 0.920 g/cm$^3$, manufactured by Mitsui Chemicals Tohcello, Inc., trade name: TUX-MCS) formed from a linear low-density polyethylene resin and having a thickness of 60 $\mu$m as the sealant layer was pasted. Thereafter, aging at 40°C for 4 days was performed. Thereby, a second film attached with a gas barrier layer was obtained.

The adhesive A was coated on the print layer of the first film attached with a print layer with a wire bar and dried at 60°C to form an adhesive layer having a thickness of 3 $\mu$m, the second film attached with a gas barrier layer was then pasted so that the resin layer and the adhesive layer were in contact with each other, and aging at 40°C for 4 days was performed. Thereby, a laminate having a lamination structure of the substrate layer/the print layer/the adhesive layer/the resin layer/the undercoat layer/the vapor deposition layer/the adhesive layer/the sealant layer was obtained.

[Physical property measurement]

(Density)

The densities of the substrate layer, the sealant layer, and the resin layer are measured by the measurement method according to JIS K7112:1999.

(Molecular orientation ratio)

The molecular orientation ratios of the substrate layer and the sealant layer were measured using a molecular orientation meter (manufactured by Oji Scientific Instruments Co., Ltd., trade name: MOA-5012A).

(Heat-fusing temperature)

The heat-fusing temperature of each of the substrate layer and the sealant layer is determined by measuring a heat-sealing temperature of a layer to be measured by the measurement method according to JIS Z0238:1998. Specifically, when two layers to be measured were superimposed and heated with a heat sealing tester at a pressure of 0.2 MPa for 1 second, the minimum temperature at which the heat-sealed portion not peeled off by heat-fusing can be formed was regarded as the heat-fusing temperature. Furthermore, the difference in heat-fusing temperature between the substrate layer and the sealant layer was shown in Table 1 to Table 3.

(Oxygen transmission rate (OTR))

The oxygen transmission rate of the adhesive layer was measured by the following method. The adhesive A or adhesive B was coated on a corona-treated surface of an A4 polyethylene (PE) film (thickness: 32 $\mu$m) with a wire bar, and dried and cured at 60°C to form a coating film (adhesive layer) having a thickness of 3 $\mu$m. An unstretched film (manufactured by Mitsui Chemicals Tohcello, Inc., trade name: TUX-MCS) formed from a linear low-density polyethylene resin (LLDPE) and having a thickness of 60 $\mu$m was pasted on this coating film to obtain a laminate. The obtained oxygen transmission rate of the laminate was measured under the conditions of a temperature of 30°C and a relative humidity of 70% (JIS K7126-2 (isopiestic method)). Measurement was performed by using an oxygen transmission rate measuring apparatus (manufactured by MOCON, Inc., trade name: OX-TRAN2/20). Since the detection limit of this measuring apparatus is 200 cc/m$^2$·day·atm, in a case where the measured value is the detection limit or more, the oxygen transmission rate of the adhesive layer was set to be > 200 cc/m$^2$·day·atm.

[Evaluation of laminate]

(Adhesion strength (lamination strength))

The laminate was cut into strips having a width of 15 mm, and the laminate was peeled off at a rate of 300 mm/min and the lamination strength was measured by using a Tensilon universal material testing machine (manufactured by A&D Company, Ltd.). Measurement was performed according to Determination of peel strength of bonded assemblies at 180° peel (JIS K6854-2, ISO8510-2).

(Bag-making suitability)

Two laminates were prepared. The sealant layers of the two laminates were superimposed to face each other and heat-sealed by using a heat sealer in a temperature variable condition under the conditions of 0.2 MPa and 1 second. The sample after heat sealing was cut into strips having a width of 15 mm and subjected to heat sealing strength measurement according to "Heat Sealing Strength Test of Bag" described in JIS Z0238:1998. The heat sealing strength was measured by using a Tensilon universal material testing machine (manufactured by A&D Company, Ltd.) at a tension rate of 300 mm/min. Heat sealing was performed in a temperature variable condition to prepare a heat seal curve consisting of a heat-sealing temperature and a heat sealing strength. In this heat seal curve, a temperature range from a temperature at which a heat sealing strength of 10 N/15 mm or more is obtainable to a temperature at which the sealed portion is melted by heat fusing to deform the appearance thereof was taken as a suitable bag-making temperature, and a case where this temperature range is 10°C or more was determined to have favorable bag-making suitability. In the evaluation of bag-making suitability in Table 4 to Table 6, a case where the suitable bag-making temperature range is 10°C or more was designated as "A", and a case where the suitable bag-making temperature range is less than 10°C was designated as "B".

(Oxygen transmission rate (OTR))

The oxygen transmission rate (cc/m$^2$·day·atm) of the laminate in the atmosphere of 30°C and 70% RH was measured by using an oxygen transmission rate measuring apparatus (manufactured by MOCON, Inc., trade name: OX-TRAN2/20) according to JIS K7126-2 (isopiestic method). Since the detection limit of this measuring apparatus is 200 cc/m$^2$·day·atm, in a case where the measured value is the detection limit or more, the oxygen transmission rate (cc/m$^2$·day·atm) of the laminate in the atmosphere of 30°C and 70% RH was measured using a differential-pressure gas permeability measuring apparatus (manufactured ANATEC YANACO CORPORATION, trade name: GTR-100G, gas: oxygen) according to JIS K7126-1 (differential-pressure method).

(Impact resistance (bag drop test))

The laminate was cut into a size of length 150 mm × width 138 mm to prepare two samples. The two samples were superimposed to each other so that each sealant layer became the inner side, one side of the edge in the longitudinal direction and two sides of both edges in the traverse direction were heat-sealed with a heat sealer to form a sealed portion having a width of 10 mm, thereby producing a pouch in which one side of the edge in the longitudinal direction is opened. Next, 150 g of water was filled in the pouch from the opening. Thereafter, the opening was heat-sealed over a width of 10 mm with a heat sealer to form a sealed portion, thereby hermetically sealing the pouch.
The hermetically sealed pouch was horizontally dropped from a height of 50 cm. The number of drops was set to 10 times, and the number of pouches to be horizontally dropped was set to 5. After performing the horizontal drop 10 times, presence or absence of bag breakage was visually checked for each of five pouches. The impact resistance was evaluated according to the following evaluation criteria. Note that, a laminate whose bag-making suitability was evaluated as "B" and with which a pouch could not be produced, impact resistance was not evaluated.
A: After performing the horizontal drop 10 times, bag breakage was not confirmed in all of five pouches.
B: After performing the horizontal drop 10 times, bag breakage was confirmed in one or more pouches.

(Printing suitability)

For the laminate in which the print layer is formed, the print layer was visually checked after printing, and printing suitability was evaluated according to the following evaluation criteria.

A: The displacement of pitches of the printed pictorial pattern was not confirmed, and sagging and wrinkles of the film after printing was not confirmed.
B: At least one of the displacement of pitches of the printed pictorial pattern and sagging and wrinkles of the film after printing was confirmed.

(Boil test)

The laminate was cut into a size of 15 cm × 21 cm, the two cut laminates were superimposed so that the sealant layers faced each other, and three sides were impulse-sealed into a pouch shape. 200 ml of tap water as packaged contents was placed inside the pouch, and the remaining one side was impulse-sealed to produce a four-side sealed pouch (packaging bag). The obtained pouch was subjected to a boiling treatment at 80°C for 30 minutes or at 95°C for 30 minutes with a boiling treatment apparatus. After boiling, the pouch was opened, the tap water inside the pouch was discarded, the pouch was sufficiently dried, and in this state, the lamination strength and the oxygen transmission rate (OTR) were measured by the same methods as described above. Note that, for the laminates of Examples 1-11 to 1-13, the appearance of the pouch after boiling was observed and presence of delamination, floating, or the like of the film was visually checked, but there was no problem in all the pouches.

[Table 1]

| | Substrate layer | | | | | Adhesive layer | | | Sealant layer | | | | | Difference in heat-fusing temperature (°C) | PE content in laminate (% by mass) |
|---|---|---|---|---|---|---|---|---|---|---|---|---|---|---|---|
| | Material | Thickness (μm) | Density (g/cm³) | Molecular orientation ratio | Heat-fusing temperature (°C) | Material | OTR (cc/m²·day·atm) | Thickness (μm) | Material | Thickness (μm) | Density | Molecular orientation ratio | Heat-fusing temperature (°C) | | |
| Example 1-1 | Unstretched HDPE | 32 | 0.956 | 1.04 | 140 | Adhesive A | >200 | 3.0 | Unstretched LLDPE-1 | 60 | 0.920 | 1.01 | 115 | 25 | >90 |
| Example 1-2 | Unstretched MDPE | 40 | 0.940 | 1.03 | 125 | Adhesive A | >200 | 3.0 | Unstretched LLDPE-1 | 60 | 0.920 | 1.01 | 115 | 10 | >90 |
| Example 1-3 | Unstretched HDPE | 32 | 0.956 | 1.04 | 140 | Adhesive A | >200 | 3.0 | Unstretched LLDPE-2 | 60 | 0.920 | 1.02 | 110 | 30 | >90 |
| Comparative Example 1-1 | Stretched HDPE-1 | 25 | 0.960 | 1.14 | 140 | Adhesive A | >200 | 3.0 | Unstretched LLDPE-1 | 60 | 0.920 | 1.01 | 115 | 25 | >90 |
| Comparative Example 1-2 | Stretched HDPE-2 | 25 | 0.960 | 1.30 | 140 | Adhesive A | >200 | 3.0 | Unstretched LLDPE-1 | 60 | 0.920 | 1.01 | 115 | 25 | >90 |
| Comparative Example 1-3 | Stretched LLDPE-1 | 40 | 0.920 | 1.01 | 115 | Adhesive A | >200 | 3.0 | Unstretched LLDPE-1 | 60 | 0.920 | 1.01 | 115 | 0 | >90 |

[Table 2]

| | Substrate layer | | | | | Gas barrier layer | | | Adhesive layer | | | Sealant layer | | | | | Difference in heat-fusing temperature (°C) | PE content in laminate (% by mass) |
|---|---|---|---|---|---|---|---|---|---|---|---|---|---|---|---|---|---|---|
| | Material | Thickness (μm) | Density (g/cm³) | Molecular orientation ratio | Heat-fusing temperature (°C) | AC layer | Vapor deposition layer | OC layer | Material | OTR (cc/m²·day·atm) | Thickness (μm) | Material | Thickness (μm) | Density | Molecular orientation ratio | Heat-fusing temperature (°C) | | |
| Example 1-1 | Unstretched HDPE | 32 | 0.956 | 1.04 | 140 | - | - | - | Adhesive A | >200 | 3.0 | Unstretched LLDPE-1 | 60 | 0.920 | 1.01 | 115 | 25 | >90 |
| Example 1-4 | Unstretched HDPE | 32 | 0.956 | 1.04 | 140 | - | - | - | Adhesive B | 28 | 3.0 | Unstretched LLDPE-1 | 60 | 0.920 | 1.01 | 115 | 25 | >90 |
| Example 1-5 | Unstretched HDPE | 32 | 0.956 | 1.04 | 140 | AC-1 | SiO | - | Adhesive A | >200 | 3.0 | Unstretched LLDPE-1 | 60 | 0.920 | 1.01 | 115 | 25 | >90 |
| Example 1-6 | Unstretched HDPE | 32 | 0.956 | 1.04 | 140 | AC-1 | SiO | OC-1 | Adhesive A | >200 | 3.0 | Unstretched LLDPE-1 | 60 | 0.920 | 1.01 | 115 | 25 | >90 |
| Example 1-7 | Unstretched HDPE | 32 | 0.956 | 1.04 | 140 | AC-1 | SiO | OC-2 | Adhesive A | >200 | 3.0 | Unstretched LLDPE-1 | 60 | 0.920 | 1.01 | 115 | 25 | >90 |
| Example 1-8 | Unstretched HDPE | 32 | 0.956 | 1.04 | 140 | AC-1 | SiO | - | Adhesive B | 28 | 3.0 | Unstretched LLDPE-1 | 60 | 0.920 | 1.01 | 115 | 25 | >90 |
| Example 1-9 | Unstretched HDPE | 32 | 0.956 | 1.04 | 140 | - | Al | - | Adhesive B | 28 | 3.0 | Unstretched LLDPE-1 | 60 | 0.920 | 1.01 | 115 | 25 | >90 |
| Example 1-10 | Unstretched HDPE | 32 | 0.956 | 1.04 | 140 | AC-1 | AlO | - | Adhesive B | 28 | 3.0 | Unstretched LLDPE-1 | 60 | 0.920 | 1.01 | 115 | 25 | >90 |
| Comparative Example 1-4 | Stretched HDPE-1 | 25 | 0.960 | 1.14 | 140 | AC-1 | SiO | OC-2 | Adhesive A | >200 | 3.0 | Unstretched LLDPE-1 | 60 | 0.920 | 1.01 | 115 | 25 | >90 |

[Table 3]

| | Substrate layer | | | | | Resin layer | Gas barrier layer | | | Adhesive layer | | | Sealant layer | | | | | Difference in heat-fusing temperature (°C) | PE content in laminate (% by mass) |
|---|---|---|---|---|---|---|---|---|---|---|---|---|---|---|---|---|---|---|---|
| | Material | Thickness (μm) | Density (g/cm$^3$) | Molecular orientation ratio | Heat-fusing temperature | Material | AC layer | Vap or deposition layer | OC layer | Material | OTR (cc/m$^2$·day·atm) | Thickness (μm) | Material | Thickness (μm) | Density | Molecular orientation ratio | Heat-fusing temperature (°C) | | |
| Example 1-11 | Unstretched HDPE | 32 | 0.956 | 1.04 | 140 | - | - | - | - | Adhesive A | >200 | 3.0 | Unstretched LLDPE-2 | 60 | 0.920 | 1.02 | 110 | 30 | >90 |
| Example 1-12 | Unstretched HDPE | 32 | 0.956 | 1.04 | 140 | - | AC-1 | SiO | OC-2 | Adhesive A | >200 | 3.0 | Unstretched LLDPE-1 | 60 | 0.920 | 1.01 | 115 | 25 | >90 |
| Example 1-13 | Unstretched HDPE | 32 | 0.956 | 1.04 | 140 | Unstretched HDPE | AC-1 | SiO | - | Adhesive B | 28 | 3.0 | Unstretched LLDPE-1 | 60 | 0.920 | 1.01 | 115 | 25 | >90 |

EP 4 245 534 A1

[Table 4]

| | Lamination strength (N/15 mm) | Bag-making suitability | Impact resistance |
|---|---|---|---|
| Example 1-1 | >10 | A | A |
| Example 1-2 | >10 | A | A |
| Example 1-3 | >10 | A | A |
| Comparative Example 1-1 | 1.8 | A | B |
| Comparative Example 1-2 | 2.2 | A | B |
| Comparative Example 1-3 | >10 | B | - |

[Table 5]

| | Lamination strength (N/15 mm) | Bag-making suitability | OTR (cc/m$^2$·day·atm) | Impact resistance |
|---|---|---|---|---|
| Example 1-1 | >10 | A | 1500 | A |
| Example 1-4 | >10 | A | 20 | A |
| Example 1-5 | >10 | A | 3.4 | A |
| Example 1-6 | >10 | A | 0.3 | A |
| Example 1-7 | >10 | A | 0.8 | A |
| Example 1-8 | >10 | A | 0.5 | A |
| Example 1-9 | 4 | A | 3.0 | A |
| Example 1-10 | 2.8 | A | 1.2 | A |
| Comparative Example 1-4 | 1.8 | A | 0.5 | B |

[Table 6]

| | Lamination strength (N/15 mm) | Bag-making suitability | OTR (cc/m²·day·atm) | After boiling at 80°C for 30 minutes | | After boiling at 95°C for 30 minutes | | Printing suitability | Impact resistance |
| | | | | Lamination strength (N/15 mm) | OTR (cc/m²·day·atm) | Lamination strength (N/15 mm) | OTR (cc/m²·day·atm) | | |
|---|---|---|---|---|---|---|---|---|---|
| Example 1-11 | >10 | A | - | - | - | - | - | A | A |
| Example 1-12 | >10 | A | 0.5 | >10 | 0.5 | >10 | 0.8 | A | A |
| Example 1-13 | >10 | A | 0.8 | >10 | 1.1 | >10 | 1.4 | A | A |

[Preparation of composition for forming undercoat layer (anchor coating agent)]

A composition (anchor coating agent) AC-1 for forming an undercoat layer was prepared by the same method as described above.

[Preparation of composition for forming gas barrier coating layer (overcoating agent)]

The following A, B, and C solutions each were mixed at a mass ratio of 70/20/10 to prepare a composition (overcoating agent) for forming a gas barrier coating layer. In Table 7, the gas barrier coating layer is described as "OC layer".

A solution: hydrolyzed solution with a solid content of 5% by mass (in terms of $SiO_2$) obtained by adding 72.1 g of 0.1 N hydrochloric acid to 17.9 g of tetraethoxysilane ($Si(OC_2H_5)_4$) and 10 g of methanol, stirring the mixture for 30 minutes, and hydrolyzing the mixture
B solution: 5% by mass of polyvinyl alcohol water/methanol solution (mass ratio of water : methanol: 95 : 5)
C solution: hydrolyzed solution obtained by diluting 1,3,5-tris(3-trialkoxysilylpropyl) isocyanurate with a mixed solution of water/isopropyl alcohol (mass ratio of water : isopropyl alcohol: 1 : 1) at a solid content of 5% by mass

[Production of substrate A]

The aforementioned composition for forming an undercoat layer was applied by a gravure coating method to a corona-treated surface of an unstretched polyethylene film (three-layered configuration of HDPE/MDPE/HDPE) having a thickness of 25 $\mu$m and one surface subjected to a corona treatment, and dried to provide an undercoat layer having a thickness of 0.1 $\mu$m. Next, a transparent vapor deposition layer (alumina deposition film) formed from aluminum oxide and having a thickness of 10 nm was formed by a vacuum deposition apparatus using an electron beam heating method. The O/Al ratio of the alumina deposition film was set to 1.5 by adjusting deposition material species. The aforementioned composition for forming a gas barrier coating layer was applied onto the vapor deposition layer by a gravure coating method and dried to form a gas barrier coating layer having a gas barrier function and having a thickness of 0.3 $\mu$m. Thereby, a substrate A in which the vapor deposition layer formed from alumina and the gas barrier coating layer were formed was obtained.

[Production of substrate B]

The composition for forming an undercoat layer was applied to the same unstretched polyethylene film as the substrate A by a gravure coating method and dried to provide an undercoat layer having a thickness of 0.1 $\mu$m. Next, a transparent vapor deposition layer (silica deposition film) formed from silicon oxide and having a thickness of 30 nm was formed by a vacuum deposition apparatus using an electron beam heating method. The O/Si ratio of the silica deposition film was set to 1.8 by adjusting deposition material species. Thereby, a substrate B on which the vapor deposition layer formed from silica was formed was obtained.

[Production of substrate C]

A substrate C in which the vapor deposition layer formed from alumina and the gas barrier coating layer were formed was obtained by the same procedure as in the substrate A, except that one surface of a polyethylene film having a thickness of 25 $\mu$m was subjected to a corona treatment, and a uniaxially stretched polyethylene film (three-layered configuration of HDPE/MDPE/HDPE) stretched only in the MD (machine direction) direction (the flowing direction of film formation) was used.

[Production of substrate D]

A substrate D in which the vapor deposition layer formed from silica was formed was obtained by the same procedure as in the substrate B, except that one surface of a polyethylene film having a thickness of 25 $\mu$m was subjected to a corona treatment, and a biaxially stretched polyethylene film (three-layered configuration of HDPE/MDPE/HDPE) stretched in the MD direction and the TD direction (transverse direction: a direction orthogonal to the MD direction on the plane) was used.

(Example 2-1)

A corona-treated surface of an unstretched polyethylene film (three-layered configuration of HDPE/MDPE/HDPE) having a thickness of 25 μm and one surface subjected to a corona treatment and an unstretched polyethylene film (single-layered configuration of LLDPE) having a thickness of 40 μm as the sealant layer were laminated by a dry lamination method using an urethane-based adhesive. Thereby, a laminate according to Example 2-1 was obtained. Example 2-1 is an example not including a gas barrier layer.

(Example 2-2)

The same sealant layer as in Example 2-1 was laminated on the gas barrier coating layer side of the substrate A by a dry lamination method using a urethane-based adhesive. Thereby, a laminate according to Example 2-2 was obtained.

(Example 2-3)

The same sealant layer as in Example 2-1 was laminated on the vapor deposition layer side of the substrate B by a dry lamination method using a gas-barrier adhesive. As the gas-barrier adhesive, an epoxy-based adhesive, which is obtained by mixing 16 parts by mass of Maxive C93T manufactured by MITSUBISHI GAS CHEMICAL COMPANY, INC. and 5 parts by mass of Maxive M-100 manufactured by MITSUBISHI GAS CHEMICAL COMPANY, INC. with 23 parts by mass of a solvent obtained by mixing ethyl acetate and methanol at a mass ratio of 1 : 1, was used. The thickness of the gas-barrier adhesive was 3 μm. Thereby, a laminate according to Example 2-3 was obtained.

(Comparative Example 2-1)

A corona-treated surface of a biaxially stretched polyethylene film (three-layered configuration of HDPE/MDPE/HDPE) having a thickness of 25 μm and one surface subjected to a corona treatment and an unstretched polyethylene film (single-layered configuration of LLDPE) having a thickness of 40 μm as the sealant layer were laminated by a dry lamination method using an urethane-based adhesive. Thereby, a laminate according to Comparative Example 2-1 was obtained. Comparative Example 2-1 does not include a gas barrier layer.

(Comparative Example 2-2)

The same sealant layer as in Example 2-1 was laminated on the gas barrier coating layer side of the substrate C by a dry lamination method using a urethane-based adhesive. Thereby, a laminate according to Comparative Example 2-2 was obtained.

(Comparative Example 2-3)

The same sealant layer as in Example 2-1 was laminated on the vapor deposition layer side of the substrate D by a dry lamination method using the same gas-barrier adhesive as in Example 2-3. The thickness of the gas-barrier adhesive was 3 μm. Thereby, a laminate according to Comparative Example 2-3 was obtained.

[Evaluation]

The following evaluation was performed for the laminate according to each of Examples and Comparative Examples. Results are shown in Table 7.

(Recyclability)

The content (% by mass) of polyethylene in the laminate of each example was calculated on the basis of the above Formula (1). The evaluation was the following two grades.

A (good): 90% by mass or more of polyethylene is contained.
B (bad): The content of polyethylene is less than 90% by mass.

(Impact resistance)

Ten packaging bags having a size of 100 mm × 150 mm in which the edge portion is heat-sealed were produced by using the laminate according to each example. This packaging bag was filled with 200 g of distilled water, sealed by heat sealing, and stored at 5°C for 1 day. After storage, each packaging bag was dropped from a height of 1.5 m 50 times, and the number of broken packaging bags was recorded.

(Oxygen transmission rate: OTR)

The oxygen transmission rate was measured by a MOCON method under the conditions of 30°C and 70% RH (relative humidity). For Examples, in addition to the laminate single body, the oxygen transmission rate of the packaging bag not broken in impact resistance evaluation was also measured.

(Water vapor transmission rate: WVTR)

The water vapor transmission rate was measured by a MOCON method under the conditions of 40°C and 90% RH. For Examples, in addition to the laminate single body, the water vapor transmission rate of the packaging bag not broken in impact resistance evaluation was also measured.

[Table 7]

| | Substrate layer | Gas barrier layer | Adhesive layer | Recyclability | | Barrier properties | | Impact resistance | Barrier properties (after performing drop 50 times) | |
| --- | --- | --- | --- | --- | --- | --- | --- | --- | --- | --- |
| | | | | Polyethylene proportion (% by mass) | Evaluation | OTR (cc/m$^2$·day·atm) | WVTR (g/m$^2$·day) | Number of broken bag/ number of specimen | OTR (cc/m$^2$·day·atm) | WVTR (g/m$^2$·day) |
| Example 2-1 | Unstretched | None | Urethane-based | 94 | A | 1620.0 | 4.0 | 0/10 | 1620.0 | 40 |
| Example 2-2 | Unstretched | SiOx/OC layer | Urethane-based | 94 | A | 1.4 | 0.8 | 0/10 | 100.0 | 3.0 |
| Example 2-3 | Unstretched | AlOx/OC layer | Epoxy-based barrier adhesive | 94 | A | 1.2 | 0.7 | 0/10 | 20 | 1.0 |
| Comparative Example 2-1 | Biaxially stretched | None | Urethane-based | 94 | A | 1580.0 | 3.0 | 8/10 | - | - |
| Comparative Example 2-2 | Biaxially stretched | SiOx/OC layer | Urethane-based | 94 | A | 1.4 | 0.8 | 8/10 | - | - |
| Comparative Example 2-3 | Biaxially stretched | AlOx/OC layer | Epoxy-based barrier adhesive | 94 | A | 1.2 | 0.7 | 8/10 | - | - |

In all examples, recyclability was favorable. Examples and Comparative Examples provided with the gas barrier layer showed favorable OTR and WVTR, but in Comparative Examples in which the substrate layer is a stretched film, bag breakage occurred at a high rate in impact resistance evaluation. On the other hand, in Examples in which the substrate layer is an unstretched film, bag breakage did not occur and high impact resistance was exhibited in impact resistance evaluation. Furthermore, the packaging bag according to Example 2-3 in which the substrate layer and the sealant layer were bonded with a gas-barrier adhesive maintained favorable OTR even after severe impact resistance evaluation.

Hereinbefore, while respective embodiments and Examples of the present disclosure have been described, the specific configurations are not limited to these embodiments and Examples, and changes, combinations, and the like to the configuration within a range that does not deviate from the gist of the present disclosure are also included in the present disclosure.

Furthermore, in the laminate of the present disclosure, the gas barrier layer is not essential. That is, for example, in a case where the laminate is used in a packaging material in which packaged contents are not required to have barrier properties, the gas barrier layer may be omitted. In the case of providing the gas barrier layer, the gas barrier coating layer is not essential.

### Reference Signs List

1: substrate layer, 2, 9: adhesive layer, 3: sealant layer, 4: print layer, 5: undercoat layer, 6: vapor deposition layer, 7: gas barrier coating layer, 8: resin layer, 9: adhesive layer, 10: gas barrier layer, 100, 200, 300, 400, 500, 600, 700, 800: laminate, 900: standing pouch.

### Claims

1.  A laminate comprising: a substrate layer; a sealant layer; and an adhesive layer disposed between the substrate layer and the sealant layer, the adhesive layer being in contact with the sealant layer, wherein

    the substrate layer is formed from an unstretched film comprising a polyethylene having a density of 0.940 $g/cm^3$ or more as a main component,
    the sealant layer is formed from an unstretched film comprising a polyethylene as a main component, and
    a content of polyethylene occupying the laminate is 90% by mass or more.

2.  A laminate comprising: a substrate layer; an adhesive layer provided on a first surface side of the substrate layer; and a sealant layer bonded to the adhesive layer, wherein

    the substrate layer and the sealant layer are an unstretched film comprising a polyethylene as a main component, and
    a proportion of polyethylene occupying the laminate is 90% by mass or more.

3.  The laminate according to claim 1 or 2, further comprising a gas barrier layer disposed between the substrate layer and the adhesive layer.

4.  The laminate according to claim 3, wherein the gas barrier layer comprises a vapor deposition layer.

5.  The laminate according to claim 4, wherein the vapor deposition layer comprises a metal oxide.

6.  The laminate according to claim 4, wherein the vapor deposition layer comprises silicon oxide.

7.  The laminate according to any one of claims 4 to 6, wherein the gas barrier layer comprises a gas barrier coating layer disposed between the vapor deposition layer and the adhesive layer.

8.  The laminate according to any one of claims 3 to 7, wherein the gas barrier layer comprises a gas barrier coating layer comprising a water-soluble polymer.

9.  The laminate according to any one of claims 1 to 8, wherein the adhesive layer is a layer formed from a cured product of a gas-barrier adhesive.

10. The laminate according to any one of claims 1 to 9, further comprising a print layer disposed between the substrate layer and the sealant layer.

11. The laminate according to any one of claims 1 to 10, further comprising a resin layer formed from an unstretched film comprising a polyethylene as a main component, the resin layer being disposed between the substrate layer and the sealant layer.

12. The laminate according to any one of claims 1 to 11, wherein a difference in heat-fusing temperature between the substrate layer and the sealant layer is 10°C or more.

13. A packaging bag obtained by forming the laminate according to any one of claims 1 to 12 into a bag.

14. The packaging bag according to claim 13, for use in boiling.

15. A standing pouch formed by using the laminate according to any one of claims 1 to 12.

Fig.1

# Fig.2

Fig.3

*Fig.4*

# Fig.5

*Fig.6*

**Fig.7**

# Fig.8

# Fig.9

<table>
<tr><td colspan="2" align="center">**INTERNATIONAL SEARCH REPORT**</td><td>International application No.<br>**PCT/JP2021/046090**</td></tr>
</table>

**A.    CLASSIFICATION OF SUBJECT MATTER**

**B32B 27/32**(2006.01)i; **B32B 1/02**(2006.01)i; **B32B 7/12**(2006.01)i; **B32B 9/00**(2006.01)i; **B32B 9/04**(2006.01)i;
**B32B 27/00**(2006.01)i; **B65D 65/40**(2006.01)i
FI:    B32B27/32 Z; B32B1/02; B32B7/12; B32B9/00 A; B32B9/04; B32B27/00 C; B65D65/40 D

According to International Patent Classification (IPC) or to both national classification and IPC

**B.    FIELDS SEARCHED**

Minimum documentation searched (classification system followed by classification symbols)

B32B1/00-43/00; B65D65/40

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | WO 2018/221495 A1 (DAINIPPON PRINTING CO LTD) 06 December 2018 (2018-12-06)<br>claims 7, 11, paragraphs [0067], [0076], [0079], [0082], [0087], [0092], [0093], examples 2-1, 2-2, paragraphs [0106]-[0109] | 2-6, 10-15 |
| Y |  | 7-9 |
| Y | JP 2002-36419 A (TOPPAN PRINTING CO LTD) 05 February 2002 (2002-02-05)<br>claims, paragraphs [0043]-[0049] | 7-9 |
| Y | WO 2013/161480 A1 (MITSUBISHI GAS CHEMICAL COMPANY, INC) 31 October 2013 (2013-10-31)<br>claims, paragraphs [0001], [0022] | 9 |
| X | WO 2019/189092 A1 (DAINIPPON PRINTING CO LTD) 03 October 2019 (2019-10-03)<br>comparative example 6-2, paragraphs [0243]-[0247], [0250] | 1-5, 10-15 |
| A | WO 2019/021759 A1 (TOYOBO CO., LTD.) 31 January 2019 (2019-01-31)<br>paragraph [0099] | 1-15 |

☑ Further documents are listed in the continuation of Box C.          ☑ See patent family annex.

| | | |
|---|---|---|
| * | Special categories of cited documents: | "T"    later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X"    document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"    document member of the same patent family |

| Date of the actual completion of the international search | Date of mailing of the international search report |
|---|---|
| **26 January 2022** | **08 February 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT

<table>
<tr><td>International application No.</td></tr>
<tr><td>**PCT/JP2021/046090**</td></tr>
</table>

### C. DOCUMENTS CONSIDERED TO BE RELEVANT

| Category* | Citation of document, with indication, where appropriate, of the relevant passages | Relevant to claim No. |
|---|---|---|
| A | CN 110328948 A (ANHUI SHUANGJIN CO., LTD.) 15 October 2019 (2019-10-15) claims 1-7, paragraphs [0008], [0018]-[0023] | 1-15 |
| A | WO 2020/067426 A1 (DAINIPPON PRINTING CO LTD) 02 April 2020 (2020-04-02) comparative examples 1-16, paragraphs [0194]-[0535] | 1-15 |
| A | JP 2020-157514 A (DAINIPPON PRINTING CO LTD) 01 October 2020 (2020-10-01) comparative example 2 | 1-15 |
| P, X | WO 2021/176948 A1 (TOPPAN PRINTING CO LTD) 10 September 2021 (2021-09-10) claims, paragraphs [0028]-[0101], examples 1-6, 8-12, paragraphs [0108]-[0158] | 1-6, 9-15 |
| P, A | | 7, 8 |
| P, X | JP 2021-53993 A (DAINIPPON PRINTING CO LTD) 08 April 2021 (2021-04-08) claims, paragraphs [0049]-[0151], examples 1, 2, paragraphs [0164]-[0181] | 1-13 |
| P, A | | 14, 15 |

Form PCT/ISA/210 (second sheet) (January 2015)

**INTERNATIONAL SEARCH REPORT**
**Information on patent family members**

International application No.

**PCT/JP2021/046090**

| Patent document cited in search report | | | Publication date (day/month/year) | Patent family member(s) | Publication date (day/month/year) |
|---|---|---|---|---|---|
| WO | 2018/221495 | A1 | 06 December 2018 | (Family: none) | |
| JP | 2002-36419 | A | 05 February 2002 | (Family: none) | |
| WO | 2013/161480 | A1 | 31 October 2013 | US 2015/0082747 A1 claims, paragraphs [0001], [0033] EP 2842982 A1 KR 10-2015-0015450 A CN 104487476 A | |
| WO | 2019/189092 | A1 | 03 October 2019 | US 2021/0023828 A1 comparative example 6-2, paragraphs [0416]-[0422], [0437], [0438] EP 3778231 A1 | |
| WO | 2019/021759 | A1 | 31 January 2019 | US 2020/0156359 A1 [0133] EP 3659939 A1 CN 110944918 A KR 10-2020-0035412 A | |
| CN | 110328948 | A | 15 October 2019 | (Family: none) | |
| WO | 2020/067426 | A1 | 02 April 2020 | (Family: none) | |
| JP | 2020-157514 | A | 01 October 2020 | (Family: none) | |
| WO | 2021/176948 | A1 | 10 September 2021 | (Family: none) | |
| JP | 2021-53993 | A | 08 April 2021 | (Family: none) | |

Form PCT/ISA/210 (patent family annex) (January 2015)

**EP 4 245 534 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017178357 A
- JP 2020055157 A
- JP 2013177531 A